# EUROPEAN PATENT SPECIFICATION

(11) **EP 4 338 882 B1**
(45) Date of publication and mention of the grant of the patent: **21.01.2026**
(21) Application number: 23195803.4
(22) Date of filing: 06.09.2023
(51) Int. Cl.: B23P 19/04, G03B 17/56

(54) **COMPOSITE BEARING, ROTATING ASSEMBLY, AND PHOTOGRAPHIC ASSEMBLY**
VERBUNDLAGER, DREHANORDNUNG UND PHOTOGRAPHISCHE ANORDNUNG
PALIER COMPOSITE, ENSEMBLE ROTATIF ET ENSEMBLE PHOTOGRAPHIQUE

(30) Priority: 07.09.2022 CN 202222384776 U; 07.09.2022 CN 202222408804 U; 07.09.2022 CN 202222393163 U; 07.09.2022 CN 202211091332; 23.05.2023 CN 202321263333 U
(43) Date of publication of application: 20.03.2024
(73) Proprietor: Shenzhen Leqi Innovation Co., Ltd., Shenzhen, Guangdong 518000 (CN)
(72) Inventor: ZHOU, Feng, Shenzhen (CN); YAN, Keman, Shenzhen (CN); XIONG, Haiwu, Shenzhen (CN); ZHOU, Yang, Shenzhen (CN); PAN, Zhiqiang, Shenzhen (CN); XU, Jiawei, Shenzhen (CN)
(74) Representative: Valet Patent Services Limited

(56) References cited:
- WO-A1-2010/031208
- WO-A1-2018/075928
- WO-A1-2021/170102
- CN-A- 102 189 398
- JP-A- H0 763 219
- US-A1- 2015 241 760
- US-A1- 2022 412 501

## Description

### TECHNICAL FIELD

The present disclosure relates to the technical field of photographic device, in particular to a composite bearing, a rotating assembly, and a photographic assembly.

### BACKGROUND

With the improvement of living standards, photography has gradually become a hobby for more and more people. In the process of handheld shooting, stabilizer shooting, shoulder shooting, and tripod shooting, in order to facilitate the shooting, photographic accessories are commonly required to be assembled to help completing the manual rotation shooting. The photographic accessories include magic adapter, quick release plate, handle, tripod, and shoulder mount. The handle and shoulder mount can be used to adjust the angle of the shooting. However, the handle or shoulder mount in related art, after being assembled and locked, cannot be quickly rotated to adjust the shooting angle of the photographic device, which cannot meet the user's demand for quick adjustment of the shooting angle.

CN102189398A discloses a movable quick assembly device. The movable quick assembly device includes a sleeve and two clamps. A sleeve end is formed at the two ends of the sleeve respectively, and each sleeve end is radially provided with at least one splitting ditch. The two clamps are sleeved on the sleeve ends of the sleeve in a rotatable manner respectively, and combined with a quick disassembly member respectively to compress the splitting ditches so as to press the sleeve ends tightly. Thus, the position of the clamps relative to the sleeve can be rotatably adjusted, which is beneficial to the adjustment of the press angle of the clamps and is convenient to assemble together with other members.

### SUMMARY

The main purpose of the present disclosure is to provide a composite bearing, a rotating assembly, and a photographic assembly, aiming to achieve quick rotation to adjust the shooting angle of the photographic device, making it convenient for users to quickly adjust the shooting angle.

The present disclosureis set out in the appended set of claims.

In order to achieve the above purpose, the present disclosure provides a rotating assembly applied to a photographic device. The rotating assembly includes a housing, two annular retaining frames, an elastic member, and an unlocking assembly. The housing is defined with a mounting hole. The two annular retaining frames are rotatably arranged in the mounting hole in sequence along an axial direction of the mounting hole. Both of the two annular retaining frames are defined with a through hole. A side wall of each of the annular retaining frames is provided with a plurality of rolling members arranged at intervals and along a periphery of the annular retaining frames. The rolling members move toward to or away from an axis of the through hole as the annular retaining frames rotate. The radius of the rolling member is ranged from 0.3mm to 20mm. The elastic member is connected to the two annular retaining frames to drive the rolling members to move toward to the axis of the through hole. The unlocking assembly is connected to the two annular retaining frames, and configured to drive the rolling members of the two annular retaining frames to move away from the axis of the through hole.

In some embodiments, the unlocking assembly includes an operating member configured for handheld operation and a pulling rope. The operating member is arranged on the housing. The pulling rope has two ends with one end connecting to one of the two annular retaining frames, and the other end connecting to the other one of the annular retaining frames. The operating member is connected to the pulling rope to pull the two annular retaining frames to rotate in opposite directions through the polling rope, causing the rolling members of the annular retaining frames to move away from the axis of the through hole.

In some embodiments, the operating member includes a trigger articulated with the housing. The pulling rope hangs on an end of the trigger, and the other end of the trigger defines an operating portion. The two annular retaining frames are driven to rotate in opposite directions by way of pulling rope outwardly by the trigger.

In some embodiments, the operating member includes a knob rotatably arranged on the housing. An end of the knob along the axial direction is connected to the pulling rope, and the two annular retaining frames are driven to rotate in opposite directions by the pulling rope by way of twisting the knob.

In some embodiments, an outer side of the housing is provided with two first mounting arms arranged at intervals and facing to each other. The knob is rotatably arranged at a top of the two first mounting arms. An end of the knob close to the mounting hole is positioned over a middle portion of the pulling rope, and the middle portion of the pulling rope is threaded through or hanged on an end of the knob close to the mounting hole.

In some embodiments, both sides of the knob are provided with a first limiting rod respectively, and the two first limiting rods are located between the two first mounting arms. The two first limiting rods are located between two ends of the pulling rope, one of the two first limiting rods presses the pulling rope on a side of the knob, and the other one of the first limiting rods presses the pulling rope on the other side of the knob.

In some embodiments, the operating member includes a button. An end of the button acts on the pulling rope, by way of pressing down the pulling rope, to drive the two annular retaining frames to rotate in opposite directions.

In some embodiments, the outer side of the housing is provided with two second mounting arms arranged at intervals and facing to each other. The button is slidably connected to the two second mounting arms along a direction toward the mounting hole. Both sides of the button are provided with a second limiting rod respectively, the two second limiting rods are located between the two second mounting arms. The middle portion of the pulling rope hangs on the two second limiting rods, and an end of the button close to the mounting hole is pressed against the middle portion of the pulling rope.

In some embodiments, both sides of the button are provided with a third limiting rod respectively, the two third limiting rods are located between the two second mounting arms. The third limiting rods are located between the second limiting rods and the mounting hole. One of the two third limiting rods presses the pulling rope on a side of the button, and the other one of the third limiting rods presses the pulling rope on the other side of the button. And/or, a telescopic spring is located between the button and one of the two second mounting arms, and another telescopic spring is located between the button and the other one of the second mounting arms. The telescopic springs applies an elastic force to the button along a direction away from the mounting hole.

In some embodiments, the unlocking assembly includes a rotating member rotatably arranged on the housing. An axis of the rotating member is perpendicular to the axis of the through hole. An end of the rotating member is provided with a rotating bevel gear, and two adjacent ends of the two annular retaining frames are engaged with the rotating bevel gear. The rotating member rotates the rotating bevel gear to drive the two annular retaining frames to rotate in opposite directions.

In some embodiments, the unlocking assembly includes two levers. One of the two levers is connected to one of the two annular retaining frames, and the other one of the levers is connected to the other one of the annular retaining frames.

In some embodiments, the annular retaining frame is defined with a plurality of mounting slots arranged at intervals and along a periphery wall of the annular retaining frame. The rolling members are correspondingly arranged in the mounting slots and are capable of moving in a radial direction of the annular retaining frame. An inner peripheral wall of the housing is provided with a plurality of contacting portions, each of the contacting portions corresponds and contacts to one of the rolling members. The contacting portions, corresponding to one of the annular retaining frames, have heights gradually increases in a first circumferential direction of the mounting hole, and the contacting portions, corresponding to the other annular retaining frame, have heights gradually decreases in the first circumferential direction of the mounting hole.

In some embodiments, a difference between a maximum distance and a minimum distance from the contacting portions to the axis of the mounting hole is set as L. A diameter of the mounting hole is set as R. The L is ranged from 0.3mm to 1.5mm. And/or, a ratio of the L to a radius of the rolling member is 0.1 to 0.6. And/or, a ratio of the L to the R is 0.012 to 0.05.

In some embodiments, an end of each of the two annular retaining frames adjacent to the other annular retaining frame is provided with an annular pawl. A peripheral side of the housing is defined with a pawl mounting port extending along a circumferential direction of the mounting hole. The pawl mounting port is arranged facing to a side wall of the two annular pawls, and the unlocking assembly is connected to the two annular pawls from the pawl mounting port.

The present disclosure further provides a photographic assembly, and the photographic assembly includes a rotating assembly, a first photographic device, and a second photographic device. The first photographic device is connected to the housing of the rotating assembly. The second photographic device includes a connecting shaft. The connecting shaft is inserted into the through hole of the annular retaining frames of the rotating assembly. The rolling members of the rotating assembly contact the connecting shaft to fix the connecting shaft. The unlocking assembly of the rotating assembly is configured to drive the rolling members to disengage from the connecting shaft, allowing relative rotation between the connecting shaft and the first photographic device.

The present disclosure provides a composite bearing, and the composite bearing includes a housing, two locking assemblies, a tension spring, and an unlocking assembly. The housing is hollowed. The two locking assemblies are rotatably arranged in the housing in sequence along an axial direction of the housing. Both of the two locking assemblies are defined with a through hole along an axial direction of the housing, and the through hole is configured to allow an external shaft to be mounted therein. The tension spring is arranged around an outer peripheral wall of the housing. The tension spring is in a stretched state and connects to the locking assemblies to allow the two locking assemblies clamping the external shaft in the through hole. The tension spring extends in a circuitous manner along a circumference of the housing. The unlocking assembly is connected to the two locking assemblies respectively, and is configured to drive the two locking assemblies to rotate to release the external shaft.

In some embodiments, a middle section of the tension spring includes a plurality of S-shaped portions or Z-shaped portions.

In some embodiments, openings of the S-shaped portions are toward an end of the housing, or openings of the Z-shaped portions are toward the end of the housing.

In some embodiments, both ends of the tension spring are provided with a hook, and each of the two hooks is connected to one of the two locking assemblies.

In some embodiments, the outer peripheral wall of the housing is defined with an annular groove, and the tension spring is arranged in the annular groove.

In some embodiments, the locking assembly includes an annular retaining frame and a plurality of rolling members. The annular retaining frame is rotatably arranged in the housing. The annular retaining frame is defined with a plurality of mounting slots arranged at intervals and along a periphery wall of the annular retaining frame. Each rolling member is correspondingly arranged in one mounting slot, and is capable of moving in a radial direction of the annular retaining frame. An inner peripheral wall of the housing is provided with a plurality of contacting portions distributed along the inner peripheral wall of the housing. Each of the contacting portions corresponds and contacts to one of the rolling members. The contacting portions have heights gradually increases or decreases in the circumferential direction of the housing.

In some embodiments, a change range in distance from the contacting portions to the axis of the housing is within 0.5mm. And/or, an outer diameter of the housing is within 25mm.

In some embodiments, the contacting portions, corresponding to one of the locking assemblies, have heights gradually increases in a circumferential direction of the housing, and the contacting portions, corresponding to the other locking assembly, have heights gradually decreases in the circumferential direction of the housing.

In some embodiments, the locking assembly includes an annular pawl. Each annular retaining frame includes an end adjacent to the other annular retaining frame, with each of the two adjacent ends connected with one of the annular pawl. A peripheral wall of the housing is defined with a pawl mounting port extending along a circumferential direction of the housing. The annular pawl is provided with a connecting post located outside of the pawl mounting port. The tension spring is wrapped around a side of the housing away from the pawl mounting port, and the tension spring has two ends with each end connecting to the connecting post of one of the two annular pawls.

In some embodiments, an inner side of each of the two annular pawls is projected with several first protrusions along a radial direction of the annular pawl. The several first protrusions are arranged at intervals in a circumferential direction of the annular pawls. Two adjacent ends of the two annular retaining frames are provided with several second protrusions along an axial direction of the annular retaining frames. The several second protrusions are arranged at intervals in a circumferential direction of the annular retaining frames. The several second protrusions of each annular retaining frame are staggered with the several first protrusions of the corresponding annular pawl, and each second protrusion is clasped between two adjacent first protrusions. And/or, an inner wall of the housing is defined with an annular pawl positioning groove. The pawl mounting port is defined on a bottom surface of the pawl positioning groove. The two annular pawls are fitted and clasped in the pawl positioning groove.

The present disclosure further provides a rotating assembly applied to a photographic device. The rotating assembly includes a rotating shaft and a composite bearing. The rotating shaft is inserted through the through hole of the two locking assemblies.

In some embodiments, the rotating assembly further includes a locking nut. A first end of the rotating shaft is provided with a coaxial first toothed disk, and a second end of the rotating shaft is provided with external threads. The locking nut threads onto the second end of the rotating shaft, and the composite bearing is clamped between the first toothed disk and the locking nut.

In some embodiments, the rotating assembly further includes an installing screw and a base. The rotating shaft is defined with a hollow shaft. An inner wall of the second end of the rotating shaft is provided with a step. The installing screw is inserted through the hollow shaft. An head end of the installing screw is clasped on the step. An threaded end of the installing screw extends out of the first end of the rotating shaft. The base is installed and fixed at an end of the composite bearing away from the first toothed disk. A side of the base facing the composite bearing is provided with a limiting column, and the limiting column is inserted into the second end of the rotating shaft. The limiting column is defined with via holes passed through the base along an axial direction of the limiting column. An end of the base away from the composite bearing is provided with a second toothed disk.

The present disclosure provides a composite bearing, and the composite bearing includes a housing, two locking assemblies, a tension spring, and an unlocking assembly. The housing is hollowed. The two locking assemblies is rotatably arranged in the housing in sequence along an axial direction of the housing. Both of the two locking assemblies defined with a through hole along an axial direction of the housing, and the through hole is configured to allow an external shaft to be mounted therein. The tension spring is arranged around an outer peripheral wall of the housing. The tension spring is in a stretched state and connects to the locking assemblies to allow the two locking assemblies clamping the external shaft in the through hole. The unlocking assembly includes a first pulling member, a second pulling member, a connecting member, and an unlocking member. An end of the first pulling member is rotatably connected to one of the locking assemblies, and the other end of the first pulling member is rotatably connected to an end of the connecting member. An end of the second pulling member is rotatably connected to the other one of the locking assemblies, and the other end of the second pulling member is rotatably connected to the other end of the connecting member. The unlocking member drives the connecting member to move upward to drive the first pulling member and the second pulling member to drive the two locking assemblies to rotate to release the external shaft.

In some embodiments, the unlocking assembly further includes a first shaft rod. Two first shaft rod has two ends with one provided with a first connecting portion and the other provided with a second connecting portion. The first connecting portion and the second connecting portion are protruded on a front side and a rear side of the connecting member respectively. The first connecting portion is connected to the first pulling member, and the second connecting portion is connected to the second pulling member.

In some embodiments, the composite bearing further includes a mounting seat arranged on the housing. The mounting seat is defined with a mounting port. An end of the connecting member passing through the mounting port is provided with a second shaft rod. The unlocking member is rotatably connected to the mounting seat through a third shaft rod, and the third shaft rod is arranged parallel to the second shaft rod. The unlocking member is defined with a slot defined with an opening towards the second shaft rod. An outer peripheral wall of the second shaft rod is engaged in the slot. The unlocking member drives the second shaft rod to move upward to drive the connecting member to move upward when the unlocking member rotates in a first direction around the third shaft rod.

In some embodiments, an upper surface of the mounting seat is provided with the first connecting portion. The unlocking member includes the second connecting portion, and the second connecting portion is defined with a connecting groove. The first connecting portion passes through a bottom opening of the connecting groove and is rotatably accommodated in the connecting groove. The third shaft rod comprises two ends with each end protruded on one side of the first connecting portion and passing through one side wall of the connecting groove.

In some embodiments, an elastic member is provided between an inner wall of the connecting groove and an upper surface of the first connecting portion. The elastic member is located between the second shaft rod and the third shaft rod.

In some embodiments, an upper portion of the second connecting portion is further connected with a manual portion, and an outer surface of the manual portion is curved.

In some embodiments, a lower wall of the slot defines an expanded opening and has an inclined inner surface.

In some embodiments, an upper surface of the mounting seat further provided with a limiting portion opposite to the first connecting portion. The first connecting portion and the limiting portion extend radially above the mounting port. An end of the connecting member passing through the mounting port stands between the first connecting portion and the limiting portion.

In some embodiments, the locking assembly includes an annular retaining frame and a plurality of rolling members. The annular retaining frame is rotatably arranged in the housing. The annular retaining frame is defined with a plurality of mounting slots arranged at intervals and along a periphery wall of the annular retaining frame. The rolling members are correspondingly arranged in the mounting slots and are capable of moving in a radial direction of the annular retaining frame. An inner peripheral wall of the housing is provided with a plurality of contacting portions distributed along the inner peripheral wall of the housing. Each of the contacting portions corresponds and contacts to one of the rolling members. The contacting portions have heights gradually increases or decreases in the circumferential direction of the housing.

The present disclosure further provides a rotating assembly applied to a photographic device. The rotating assembly includes a rotating shaft and a composite bearing. The rotating shaft is inserted through the through hole of the two locking assemblies.

The present disclosure provides a rotating assembly applied to a photographic device. The rotating assembly includes a housing, two annular retaining frames, a rotating shaft, and a transmission assembly. The housing is defined with a mounting hole. The two annular retaining frames are rotatably arranged in the mounting hole in sequence along an axial direction of the mounting hole. The rotating shaft is inserted through the two annular retaining frames. The two annular retaining frames are driven together by the transmission assembly. The transmission assembly is configured to drive one of the annular retaining frames to rotate in the opposite direction when the other annular retaining frame rotates. The annular retaining frame is defined with a plurality of mounting slots arranged at intervals and along a periphery wall of the annular retaining frame. An outer peripheral wall of the rotating shaft is provided with two protrusions corresponding to the two annular retaining frames. The mounting slots are provided with rolling members. The protrusions, corresponding to one of the annular retaining frames, have heights gradually increases in a second circumferential direction of the rotating shaft, and the protrusions, corresponding to the other annular retaining frame, have heights gradually decreases in the second circumferential direction of the rotating shaft. The rolling members are located between the protrusions and an inner wall of the mounting hole.

In some embodiments, the outer peripheral wall of the rotating shaft corresponding to each annular retaining frame is further provided with an annular protrusion respectively. The annular protrusion is coaxial with the rotating shaft. The height of the annular protrusion is greater than a maximum height of the protrusions. The rolling member includes at least two rolling bodies, and each one of the at least two rolling bodies is clamped in two sides of the corresponding annular protrusion along an axial direction of the annular protrusion. Or, at least some of the mounting slots are provided with at least one partition, and the at least one partition divides the mounting slots into at least two segments arranged along an axial direction of the annular retaining frame.

In some embodiments, the rolling body is a ball, or the rolling body is a cylinder with an axis parallel to an axis of the rotating shaft.

In some embodiments, a wall of the mounting hole and/or the protrusions are defined with raceways matching the ball.

In some embodiments, both two ends of the housing are provided with limiting step coaxial with the mounting hole. An end of the two annular retaining frames away from each other is provided with an annular edge. The annular edge of one of the two annular retaining frames clasps into the limiting step on an end of the housing, and the annular edge of the other one of the annular retaining frames clasps into the limiting step on the other end of the housing.

In some embodiments, an end of at least one annular retaining frame close to an end of the mounting hole is provided with a handle portion.

In some embodiments, the transmission assembly includes a transmission bevel gear, and the transmission bevel gear is located between the two annular retaining frames. Two adjacent ends of the two annular retaining frames are defined with a bevel gear surface respectively. The transmission bevel gear is rotatably installed on the outer peripheral wall of the rotating shaft, and the transmission bevel gear meshes with the bevel gear surface of the two annular retaining frames.

In some embodiments, an inner wall of the mounting hole is further defined with an annular avoid groove, and the annular avoid groove is positioned over the transmission bevel gear.

In some embodiments, the transmission assembly further includes a spring member, and the spring member is located on one side of the rotating shaft. An end of the spring member is connected to the annular retaining frame, and the other end of the spring member is connected to the housing. The spring member drives the rolling members to resist both the protrusions and the housing, allowing the rotating shaft and the housing to be locked.

In some embodiments, the housing includes a barrel body and a cover body. The barrel body is defined with the mounting hole, and an end of the barrel body is defined with an opening. The cover body covers on the opening of the barrel body. The cover body is defined with an avoiding hole. The rotating shaft is provided with a first connecting portion extended out of the housing through the avoiding hole, and the first connecting portion is configured to connect a first photographic device. An end of the barrel body away from the cover body is provided with a second connecting portion, and the second connecting portion is configured to connect a second photographic device.

In some embodiments, a difference between a maximum distance and a minimum distance from the protrusions to the axis of the rotating shaft is set as L. The L is ranged from 0.3mm to 1.5mm. And/or, a radius of each rolling member is ranged from 0.3mm to 20mm. And/or, a ratio of the L to the radius of the rolling member is 0.1 to 0.6. And/or, a diameter of the mounting hole is set as R, and a ratio of the L to the R is 0.012 to 0.05.

The present disclosure further provides a photographic assembly, and the photographic assembly includes a rotating assembly, a first photographic device, and a second photographic device. The first photographic device is connected to the rotating shaft of the rotating assembly. The second photographic device is connected to the housing.

The present disclosure provides a rotating assembly applied to a photographic device. The rotating assembly includes a housing, two annular retaining frames, and a rotating shaft. The housing is defined with a mounting hole. The two annular retaining frames are rotatably arranged in the mounting hole in sequence along an axial direction of the mounting hole. The rotating shaft is inserted through the two annular retaining frames. The annular retaining frame is defined with a plurality of mounting slots arranged at intervals and along a periphery wall of the annular retaining frame. The mounting slots are provided with rolling members. An outer peripheral wall of the rotating shaft is provided with protrusions corresponding to the mounting slots. At least one rolling member is located between the protrusions and an inner wall of the mounting hole. Along the same circumferential direction of the rotating shaft, the protrusions, corresponding to one of the annular retaining frames, have heights gradually increases, and the protrusions, corresponding to the other annular retaining frame, have heights gradually decreases.

In some embodiments, the outer peripheral wall of the rotating shaft is provided with a limiting portion located between the two annular retaining frames.

In some embodiments, the limiting portion is an annular flange coaxial with the rotating shaft, and an outer diameter of the annular flange is adapted to an inner diameter of the mounting hole.

In some embodiments, the rolling member includes at least one rolling body, and the rolling body is a ball, or the rolling body is a cylinder.

In some embodiments, both two ends of the housing are provided with limiting step coaxial with the mounting hole. An end of the two annular retaining frames away from each other is provided with an annular edge. The annular edge of one of the two annular retaining frames clasps into the limiting step on an end of the housing, and the annular edge of the other one of the annular retaining frame clasps into the limiting step on the other end of the housing.

In some embodiments, an end of one of the two annular retaining frames is provided with a handle portion, an end of the other one of the annular retaining frames is provided with another handle portion, and the two ends are away from each other.

In some embodiments, the rotating assembly further includes a resetting spring. An end of the resetting spring is connected to the handle portion, and the other end of the resetting spring is connected to the housing. The resetting spring drives the rolling members to resist the rotating shaft to fix the rotating shaft.

In some embodiments, a difference between a maximum distance and a minimum distance from the protrusions to the axis of the rotating shaft is set as L. A diameter of the mounting hole is set as R. The L is ranged from 0.3mm to 1.5mm. And/or, a ratio of the L to the radius of the rolling member is 0.1 to 0.6. And/or, and a ratio of the L to the R is 0.012 to 0.05. And/or, the L is within 0.5mm.

In some embodiments, the housing is a cylindrical body in one piece, and an outer diameter of the cylindrical body is within 25mm.

The present disclosure further provides a photographic assembly, and the photographic assembly includes a rotating assembly, a first photographic device, and a second photographic device. The first photographic device is connected to the housing of the rotating assembly. The second photographic device is connected to the rotating shaft of the rotating assembly.

In the present disclosure, the composite bearing is provided with two locking assemblies rotatably arranged in the housing, and the two locking assemblies are defined with the through hole for the external shaft to be inserted in. The two locking assemblies are driven to rotate by the transmission assembly, so that the plurality of rolling members of the two locking assemblies may clamp the external shaft. The composite bearing is further provided with the unlocking assembly to drive the two locking assemblies to rotate, so that the plurality of rolling members of the two locking assemblies may release the external shaft. In this way, the composite bearing may be adjusted to an unlocked state by the unlocking assembly, allowing the external shaft to rotate freely within the through hole. When the unlocking assembly is not operated, the composite bearing remains in locked state with the external shaft fixed in the through hole. Therefore, when the composite bearing is used as a connecting member between the photographic devices, it allows to adjust and lock the angle quickly, making it more convenient for users to quickly adjust the desired shooting angle.

### BRIEF DESCRIPTION OF THE DRAWINGS

FIG. 1 is a perspective view of a composite bearing according to an embodiment of the present disclosure.
FIG. 2 is a perspective view of a portion of the composite bearing of FIG. 1.
FIG. 3 is a perspective view of a portion of the composite bearing according to an embodiment of the present disclosure.
FIG. 4 is a perspective view of the composite bearing according to an embodiment of the present disclosure.
FIG. 5 is a perspective view of a portion of the composite bearing of FIG. 4.
FIG. 6 is a perspective view of the composite bearing according to an embodiment of the present disclosure.
FIG. 7 is a perspective view of the composite bearing according to an embodiment of the present disclosure.
FIG. 8 is a perspective view of the composite bearing according to an embodiment of the present disclosure.
FIG. 9 is a perspective view of the composite bearing according to an embodiment of the present disclosure.
FIG. 10 is a cross-sectional view of the composite bearing of FIG. 9.
FIG. 11 is a perspective view of a locking assembly of the composite bearing of FIG. 9.
FIG. 12 is a plane view of the composite bearing according to an embodiment of the present disclosure.
FIG. 13 is a cross-sectional view along line A-A of FIG. 12.
FIG. 14 is a cross-sectional view along line B-B of FIG. 12.
FIG. 15 is a perspective view of a housing of the composite bearing according to an embodiment of the present disclosure.
FIG. 16 is a perspective view of the composite bearing according to an embodiment of the present disclosure.
FIG. 17 is an exploded view of the composite bearing of FIG. 16.
FIG. 18 is a perspective view of a rotating assembly according to an embodiment of the present disclosure.
FIG. 19 is a perspective view of the rotating assembly according to an embodiment of the present disclosure.
FIG. 20 is a cross-sectional view of the rotating assembly of FIG. 19.
FIG. 21 is an exploded view of a portion of the rotating assembly of FIG. 19.
FIG. 22 is a perspective view of the rotating assembly in locked state according to an embodiment of the present disclosure.
FIG. 23 is a cross-sectional view along line C-C of FIG. 22.
FIG. 24 is a perspective view of the rotating assembly in unlocked state according to an embodiment of the present disclosure.
FIG. 25 is a cross-sectional view along line D-D of FIG. 24.
FIG. 26 is a perspective view of the composite bearing according to an embodiment of the present disclosure.
FIG. 27 is an exploded view of the composite bearing of FIG. 26.
FIG. 28 is another exploded view of the composite bearing of FIG. 26.
FIG. 29 is a perspective view of the locking assembly of the composite bearing of FIG. 26.
FIG. 30 is a perspective view of a mounting seat of the composite bearing of FIG. 26.
FIG. 31 is a perspective view of an unlocking member of the composite bearing of FIG. 26.
FIG. 32 is a perspective view of the rotating assembly according to an embodiment of the present disclosure.
FIG. 33 is a perspective view of a portion of the rotating assembly of FIG. 32.
FIG. 34 is a cross-sectional view of a portion of the rotating assembly of FIG. 32.
FIG. 35 is a perspective view of a portion of the rotating assembly of FIG. 32.
FIG. 36 is an exploded view of the rotating assembly of FIG. 32.
FIG. 37 is a perspective view of a portion of an annular retaining frame of the rotating assembly of FIG. 36.
FIG. 38 is a perspective view of a rotating shaft of the rotating assembly of FIG. 36.
FIG. 39 is a perspective view of the rotating assembly according to an embodiment of the present disclosure.
FIG. 40 is a perspective view of the rotating shaft of the rotating assembly of FIG. 39.
FIG. 41 is an exploded view of the rotating assembly of FIG. 39.
FIG. 42 is a perspective view of a portion of the rotating assembly of FIG. 39.
FIG. 43 is a cross-sectional view of the rotating assembly of FIG. 39.

The realization of the purpose of the present disclosure, functional features, and advantages will be further described in conjunction with the embodiments and with reference to the accompanying drawings.

### DETAILED DESCRIPTION OF THE EMBODIMENTS

Clear and complete descriptions of the embodiments of the present disclosure are provided below in conjunction with the accompanying drawings of the embodiments of the present disclosure. It is obvious that the embodiments described are only a part of the embodiments of the present disclosure, and not all of the embodiments. Based on the embodiments of the present disclosure, all other embodiments that can be obtained by those skilled in the art without exercising creative labor are within the scope of protection of the present disclosure.

It should be noted that all directional indications (such as up, down, left, right, front, back, etc.) in the embodiments of the present disclosure are only used to explain the relative position relationship and motion of various components in a specific posture (as shown in the accompanying drawings). If the specific posture changes, the directional indications will correspondingly change.

It should also be noted that when a component is referred to as "fixed on" or "installed on" another component, the component may be directly on the other component or may exist with an intermediary component. When a component is referred to as "connected" to another component, the component may be directly connected to the other component or may exist with an intermediary component.

In addition, the terms such as "first", "second", etc. in the present disclosure are used for descriptive purposes only and should not be construed as indicating or implying relative importance or implying a specific quantity of the indicated technical features. Therefore, features designated as "first" or "second" may explicitly or implicitly include at least one instance of that feature. In addition, the technical solutions of different embodiments may be combined with each other, but it should be based on what those skilled in the art can achieve. When the combination of the technical solutions conflicts with each other or cannot be realized, it should be considered that the combination of the technical solutions does not exist and is not within the scope of protection of the present disclosure.

The present disclosure provides a composite bearing that can be applied to a photographic device (such as a magic adapter, a quick-release plate, a handle, a tripod, and a shoulder mount) to serve as a rotating joint of the photographic device. The photographic device installed with the composite bearing may be connected and rotated with another photographic device through the composite bearing. One of the photographic devices may be connected to a photographic equipment to adjust and lock the photographic equipment quickly.

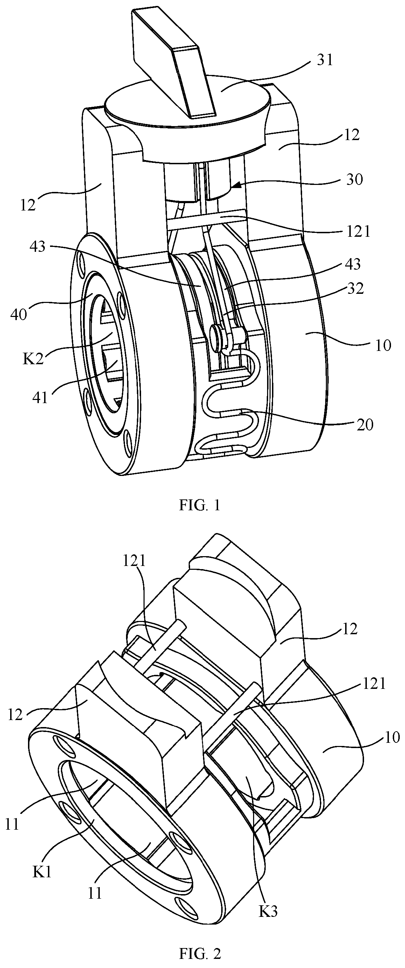

Referring to FIG. 1 to FIG. 3, in an exemplary embodiment, the composite bearing includes a housing 10, a transmission assembly 20, an unlocking assembly 30, and two locking assemblies 40.

The housing 10 is defined with a mounting hole K1. In this embodiment, the housing 10 is hollowed with two openings, that is, the mounting hole K1 is a through hole (i.e., the ends of the housing 10 are opened). In other embodiments, the mounting hole K1 may not be a through hole, and only one end of the housing 10 is opened to communicate with the mounting hole K1. The housing 10 can be a cylindrical body, or an inner cavity of the housing 10 is cylindrical. The housing 10 is a cylindrical integrated structure, which ensures the strength of the housing 10 and reduces the number of components for the composite bearing, making the overall structure more simpler.

The two locking assemblies 40 are rotatably arranged in the mounting hole K1 in sequence along an axial direction of the mounting hole K1. Both of the two locking assemblies 40 are defined with a through hole K2, and the through hole K2 is configured to allow an external shaft (the external shaft may be a joint spindle for the rotating joint of the photographic device) to be mounted therein. A side wall of each of the locking assemblies 40 is provided with a plurality of rolling members 41 arranged at intervals and along a periphery of the locking assembly 40. The rolling members 41 are located between an inner wall of the mounting hole K1 and the external shaft. The locking assemblies 40 are rotatably connected to the housing 10, that is, the locking assemblies 40 can rotate relative to the housing 10 around an axis of the locking assemblies 40. The rolling members 41 move close to or away from an axis of the through hole K2 as the locking assemblies 40 rotate. That is, the plurality of rolling members 41 forms a clamping mechanism for clamping the external shaft, and the clamping mechanism retracts inward to clamp the external shaft or expands outward to release the external shaft as the locking assemblies 40 rotate. In this embodiment, the rolling members 41 can be cylindrical, spheres, wheels, disks, or other rotatable structural members.

The transmission assembly 20 is connected to the two locking assemblies 40 respectively to allow the two locking assemblies 40 clamping the external shaft in the through hole K2. The transmission assembly 20 can drive the two locking assemblies 40 to rotate along a direction in which an elastic force is applied to the two locking assemblies 40, to indirectly drive the rolling members 41 of the locking assemblies 40 to move close to the axis of the through hole K2 (i.e., the clamping mechanism retracts inward). Thereby, the plurality of rolling members 41 of the locking assemblies 40 clamp and lock the external shaft inserted through the through hole K2, to prevent the external shaft from rotating within the through hole K2. The transmission assembly 20 may be a spring (such as a tension spring shown in the drawings, which extends in a circuitous manner along a circumference of the housing 10). The spring has two ends with each end connecting to one of the two locking assemblies 40.

The unlocking assembly 30 is connected to the two locking assemblies 40 respectively, and configured to drive the two locking assemblies 40 to rotate to release the external shaft. The unlocking assembly 30 drives the two locking assemblies 40 to rotate from a clamped position to a released position, allowing the two locking assemblies 40 to release the external shaft. The unlocking assembly 30 drives the rolling members 41 of the two locking assemblies 40 to move away from the axis of the through hole K2. The unlocking assembly 30 drives the two locking assemblies 40 to rotate in a direction which is opposite to the elastic force applied to the two locking assemblies 40, causing the rolling members 41 of the two locking assemblies 40 to move away from the axis of the through hole K2 (i.e., the clamping mechanism expands outward), thereby releasing the external shaft in the through hole K2 to lock the external shaft, allowing the external shaft to freely rotate within the through hole K2.

In this embodiment, in case the composite bearing is applied to the rotating joint of the photographic device, the housing 10 may be connected to one photographic device, and the joint spindle of another photographic device may be inserted into the through hole K2 of the composite bearing. In case the unlocking assembly 30 is not operated, the two locking assemblies 40 maintain a clamped state on the joint spindle under the elastic force of the transmission assembly 20. This prevent the joint spindle from rotating, keeping the photographic device fixed and non-adjustable. When the unlocking assembly 30 is operated, the unlocking assembly 30 drives the two locking assemblies 40 to rotate, allowing the two locking assemblies 40 to release the joint spindle. At that time, the joint spindle can freely rotate within the through hole K2, allowing the photographic device to freely adjust the shooting angle of the photographic device. Once the shooting angle of the photographic device is settled, users can release the unlocking assembly 30. The locking assemblies 40 return to the clamped state on the joint spindle under the elastic force of the transmission assembly 20, to lock the joint spindle of the photographic device. As such, the composite bearing can be adjusted to unlocked state by the unlocking assembly 30, allowing the two photographic devices to rotate to adjust the angle between the two photographic devices. The transmission assembly 20 may restore the composite bearing to the locked state, fixing the two photographic devices at the current angle.

In this embodiment, the composite bearing is provided with two locking assemblies 40 rotatably arranged in the housing 10, and the two locking assemblies 40 are defined with the through hole K2 for the external shaft to insert. The two locking assemblies 40 are driven to rotate by the transmission assembly 20, allowing the plurality of rolling members 41 of the two locking assemblies 40 to clamp the external shaft. The composite bearing is further provided with the unlocking assembly 30 to drive the two locking assemblies 40 to rotate, allowing the plurality of rolling members 41 of the two locking assemblies 40 to release the external shaft. In this way, the composite bearing may be adjusted to the unlocked state by the unlocking assembly 30, allowing the external shaft to rotate freely within the through hole K2. In case the unlocking assembly 30 is not operated, the composite bearing remains in the locked state with the external shaft fixed in the through hole K2 by the transmission assembly 20. Therefore, when the composite bearing is used as a connecting member between the photographic devices, the composite bearing is capable of perform a switch between clamping the external shaft and rotating the external shaft. By inserting the joint spindle of the rotating joint into the through hole K2 of the locking assemblies 40, a quick switch between the locked state and the unlocked state of the joint spindle of the photographic device can be achieved. This allows to adjust and lock the shooting angle quickly, which effectively solves the problem that the photographic device such as handle or shoulder mount cannot quickly adjust the shooting angle of the photographic device. This makes it more convenient for users to quickly adjust the desired shooting angle.

In this embodiment, the composite bearing includes the housing 10, the two locking assemblies 40, the transmission assembly 20, and the unlocking assembly 30. The two locking assemblies 40 is located within the housing 10, thereby the overall structural dimension of the composite bearing is small. Additionally, the external shaft is inserted to the through hole K2 of the locking assemblies 40 to be installed in the through hole K2. As such, the size of the rotating joint of the photographic device using the composite bearing is also reduced, which helps decrease the overall space occupied by the photographic device and makes the photographic device more convenient to use.

In some embodiments, the transmission assembly 20 drives the two locking assemblies 40 to rotate in opposite directions (i.e., two locking assemblies 40 rotate in different directions, for example, one locking assembly 40 rotates clockwise while the other locking assembly 40 rotates counterclockwise), causing the plurality of rolling members 41 of the two locking assemblies 40 to clamp the external shaft. The unlocking assembly 30 drives the two locking assemblies 40 to rotate in opposite directions, causing the plurality of rolling members 41 of the two locking assemblies 40 to release the external shaft. For example, the transmission assembly 20 is configured to drive a first locking assembly 40 (one of the two locking assemblies 40) to rotate in a third direction, and a second locking assembly 40 (the other one of the two locking assemblies 40) to rotate in a fourth direction (opposite to the third direction). The unlocking assembly 30 is configured to drive the first locking assembly 40 to rotate in the fourth direction and the second locking assembly 40 to rotate in the third direction.

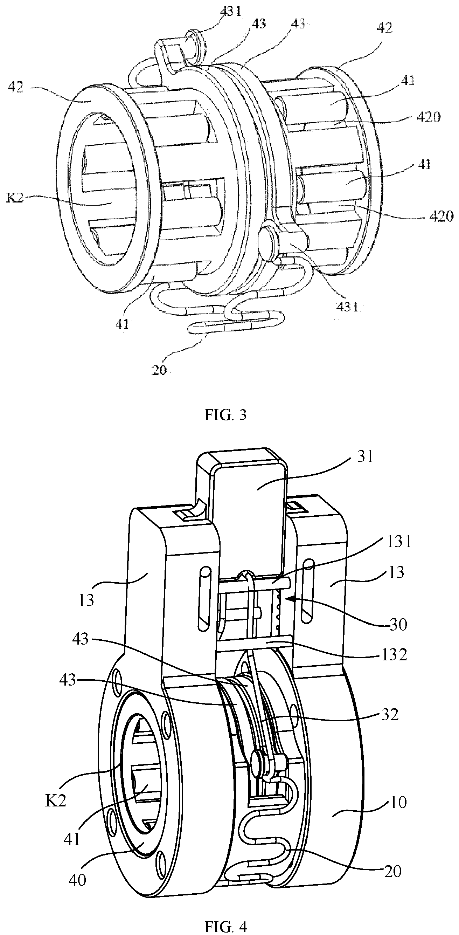

Referring to FIG. 2 and FIG. 3, in some embodiments, the locking assembly 40 further includes an annular retaining frame 42 located inside the housing 10. The annular retaining frame 42 is defined with a plurality of mounting slots 420 arranged at intervals and along a periphery wall of the annular retaining frame 42. The mounting slots 420 are radially through the annular retaining frame 42. The rolling members 41 are correspondingly arranged in the mounting slots 420 and are capable of moving in a radial direction of the annular retaining frame 42. An inner peripheral wall of the housing 10 is provided with a plurality of contacting portions 11 distributed along the inner peripheral wall of the housing 10, and each of the contacting portions 11 corresponds and contacts to one of the rolling members 41. The contacting portions 11, corresponding to one of the annular retaining frames 42, have heights gradually increases in a first circumferential direction (clockwise or counterclockwise) of the mounting hole K1; and the contacting portions 11, corresponding to the other annular retaining frame 42, have heights gradually decreases in the first circumferential direction of the mounting hole K1.

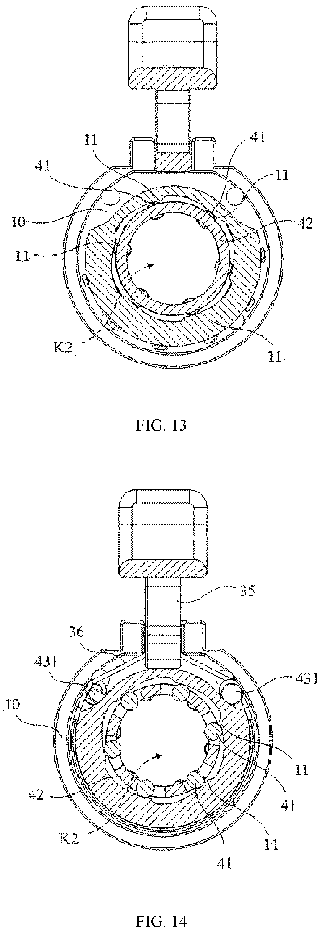

Referring to FIG. 13 and FIG. 14, in this embodiment, the contacting portions 11, corresponding to one of the locking assemblies 40, have heights gradually increases in the circumferential direction of the housing 10; and the contacting portions 11, corresponding to the other locking assembly 40, have heights gradually decreases in the circumferential direction of the housing 10. Since the external shaft is clamped by the two locking assemblies 40, when the external shaft is trended to rotate by a external force, rotating trend of the external shaft will drive the rolling members 41 to rotate in a same direction. If the direction of the rotating trend is the same as a direction in which the height of the contacting portions 11 decreases, it is easy for the external shaft to drive the rolling members 41 to be displaced and rotated towards the direction in which the contacting portions 11 decrease, resulting in a decrease of a clamping force on the external shaft and an insecure clamping to the external shaft. With this regards, this embodiment is designed to make the gradual change of the height of the contacting portions 11 corresponding to the two locking assemblies 40 be different. Assuming that the external shaft rotates clockwise or counterclockwise under the external force, all the rolling members 41 will tend to rotate in the third direction. All the rolling members 41 of one of the locking assemblies 40 will move towards the direction in which the height of the contacting portions 11 increases, that is, the direction in which the clamping force increases, so that the rolling members 41 of the locking assemblies 40 can clamp the external shaft more securely. Therefore, in this embodiment, it ensures the reliability of locking the external shaft by the composite bearing.

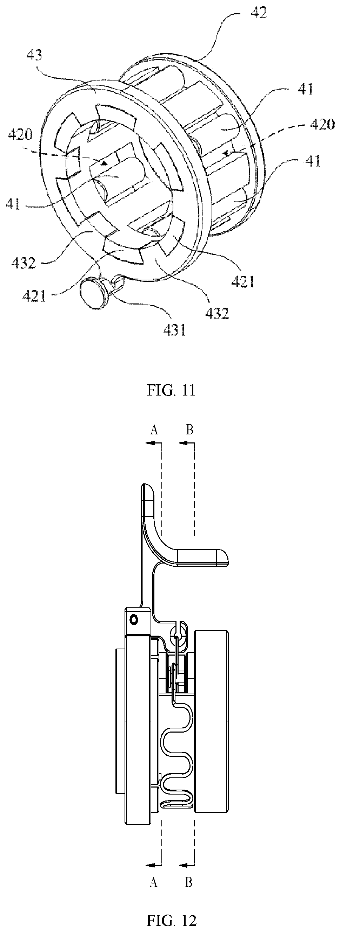

Referring to FIG. 11 to FIG. 15, in this embodiment, cylindrical roller are used as an example for the rolling member 41, and an axial direction of the cylindrical roller is parallel to an axial direction of the annular retaining frame 42. In other embodiments, the rolling member 41 may be spherical roller or the like. In this embodiment, a side of the contacting portions 11 resisted to the rolling members 41 is taken as an example of a curved surface. In other embodiments, the side of the contacting portions 11 resisted to the rolling members 41 may also be an inclined surface. In this embodiment, the rolling members 41 move from a lowest position of the height of the contacting portions 11 to a highest position of the height of the contacting portions 11, a change in diameter of an inner circle of each of the rolling members 41 is very small (e.g., 0.5mm), ensuring that there is no gap or a very small gap between the external shaft and the rolling members 41 when the rolling members 41 release the external shaft, so that the external shaft will not wobble in a radial direction, and can be adjusted stably.

In this embodiment, the number of the rolling members 41 on the annular retaining frame 42 is at least three, and a distribution positions of any two rolling members 41 cannot differ by more than 180 degrees. The number of the rolling members 41 on the annular retaining frame 42 is determined according to actual needs. The rolling members 41 may be distributed at intervals and along the periphery wall of the annular retaining frame 42, to allow the annular retaining frame 42 to equalize the force on the external shaft in various direction. In this embodiment, for example, six rolling members 41 are distributed at intervals on one annular retaining frame 42, with each adjacent pair of rolling members 41 spaced 60 degrees apart.

In this embodiment, the following is the process of the annular retaining frame 42 rotating to drive the rolling members 41 to move close to or away from the through hole K2: when the annular retaining frame 42 rotates relative to the housing 10, the rolling members 41 move from one end of the corresponding contacting portions 11 to the other end. When the annular retaining frame 42 rotates towards the direction in which the height of the contacting portions 11 increases, the rolling members 41 move from a lower end of the height of the contacting portions 11 to a higher end. Each rolling member 41 of the annular retaining frame 42 is clamped inward by the contacting portions 11 resisted with the rolling member 41, and gradually displaced inward along the radial direction of the rolling member 41. Therefore, the rolling members 41 gradually move close to the axis direction of the through hole K2, achieving clamping the external shaft. When the annular retaining frame 42 rotates towards the direction in which the height of the contacting portions 11 decreases, the rolling members 41 move from the higher end of the contacting portions 11 to the lower end. An inward extrusion force of the contacting portions 11 on the rolling members 41 gradually decreases, and the rolling members 41 gradually displaced outward along the radial direction. The rolling members 41 gradually move away from the axis direction of the through hole K2 along the contacting portions 11, and the clamping force of each of the rolling members 41 on the outer peripheral wall of the external shaft gradually decreases until it becomes zero, achieving releasing the external shaft.

The transmission assembly 20 keeps the annular retaining frame 42 moving in the direction in which the height of the contacting portions 11 increases to ensure each rolling member 41 staying pressed against the outer peripheral wall of the external shaft, maintaining clamping the external shaft. The unlocking assembly 30 drives the annular retaining frame 42 of the two locking assemblies 40 to rotate in the direction in which the height of the contacting portions 11 decreases to ensure each rolling member 41 releasing the external shaft, achieving free rotation of the external shaft.

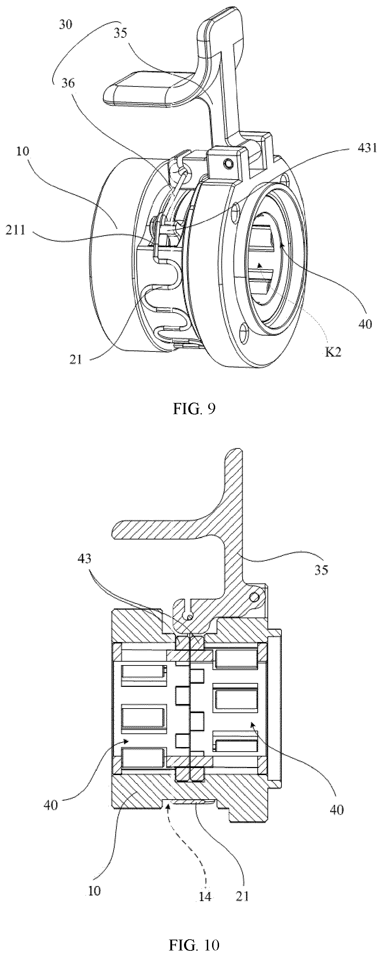

Referring to FIG. 9 and FIG. 10, in this embodiment, the transmission assembly 20 includes a tension spring 21 arranged around an outer peripheral wall of the housing 10. The tension spring 21 is in a stretched state and connects to the locking assemblies 40 to allow the two locking assemblies 40 clamping the external shaft in the through hole K2. The tension spring 21 extends in a circuitous manner along a circumference of the housing 10. It is understandable that, in case the unlocking assembly 30 is not operated, the tension spring 21 may restore the clamping force on the external shaft of the two locking assemblies 40 through the elastic force on the two locking assemblies 40.

The tension spring 21 is attached to the outer peripheral wall of the housing 10, and the whole tension spring 21 is smaller in thickness, allowing the tension spring 21 to be installed within a smaller radial space in the housing 10, which reduces the radial dimension of the housing 10 to make the housing 10 a smaller size. As such, it is beneficial for miniaturization and modularization of the composite bearing.

In this embodiment, a middle section of the tension spring 21 (i.e., section between two ends of the tension spring 21) includes a plurality of S-shaped portions. That is, the tension spring 21 extends in an S-shaped circuitous manner around the outer peripheral wall of the housing 10. In other embodiments, the middle section of the tension spring 21 may includes a plurality of Z-shaped portions, that is, the tension spring 21 extends in an Z-shaped circuitous manner around the outer peripheral wall of the housing 10. In this embodiment, openings of the S-shaped portions are toward an end of the housing 10, or openings of the Z-shaped portions are toward the end of the housing 10. In this way, the elastic force of the tension spring 21 keeps along the circumferential direction of the housing 10.

In this embodiment, both ends of the tension spring 21 are provided with a hook 211. One of the two hooks 211 is connected to one of the two locking assemblies 40, and the other one of the hooks 211 is connected to the other one of the locking assemblies 40. In this embodiment, the tension spring 21 is connected to the locking assembly 40 through the hook 211, making the assembly and disassembly of the tension spring 21 simpler and more convenient. In other embodiments, the tension spring 21 can be connected to the locking assembly 40 in other ways.

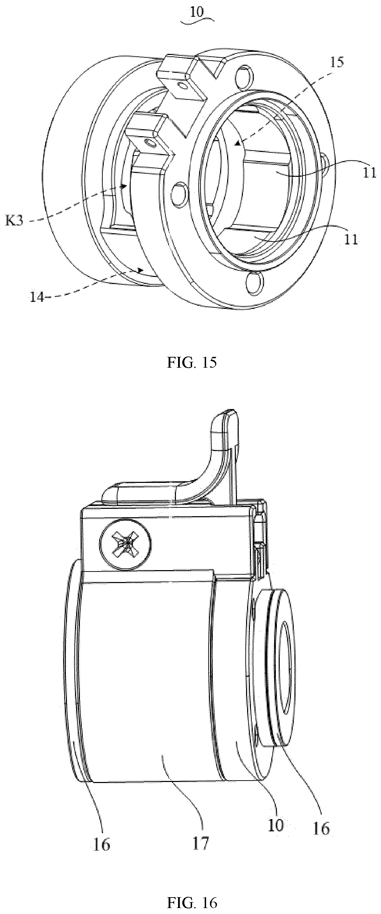

Referring to FIG. 10 and FIG. 15, in this embodiment, the outer peripheral wall of the housing 10 is defined with an annular groove 14, and the tension spring 21 is arranged in the annular groove 14. By providing the annular groove 14 to accommodate the tension spring 21, the tension spring 21 does not protrude from the outer wall of the housing 10, thereby reducing the overall size.

Referring to FIG. 1, FIG. 4 to FIG. 6, FIG. 8 to FIG. 11, and FIG. 15, in some embodiments, an end of each of the two locking assemblies 40 adjacent to the other locking assembly 40 is provided with an annular pawl 43. Each annular retaining frame 42 includes an end adjacent to the other annular retaining frame 42, with each of the two adjacent ends connected with one of the annular pawl 43. That is, the annular pawl 43 is connected to one end of the annular retaining frame 42 away from the end of the housing 10. A peripheral side of the housing 10 is defined with a pawl mounting port K3 extending along a circumferential direction of the mounting hole K1. The pawl mounting port K3 is arranged facing to a side wall of the two annular pawls 43, and the unlocking assembly 30 is connected to the two annular pawls 43 through the pawl mounting port K3. In addition, the transmission assembly 20 may also be connected to the two annular pawls 43 through the pawl mounting port K3, and indirectly connected to the two annular retaining frames 42.

Furthermore, the annular pawl 43 is provided with a connecting post 431 located outside of the pawl mounting port K3. The tension spring 21 is wrapped around a side of the housing 10 away from the pawl mounting port K3, and the tension spring 21 has two ends with each end connecting to the connecting post 431 of one of the two annular pawls 43. Each annular pawl 43 may extend outside of the pawl mounting port K3 to define a connecting post 431, so that two ends of the tension spring 21 can be respectively connected to the two connecting posts 431, making the connection between the tension spring 21 and the annular retaining frames 42 more convenient and simple.

In this embodiment, the annular pawl 43 is installed into the housing 10 through the pawl mounting port K3 (of course, the length of the pawl mounting port K3 is not smaller than an outer diameter of the annular pawl 43). The connecting post 431 on the annular pawl 43 is exposed outside of the pawl mounting port K3, making it easy for the tension spring 21 to connect with the annular pawl 43. The tension spring 21 is wound around the side of the housing 10 away from the pawl mounting port K3, and one end of the tension spring 21 is connected to the connecting post 431 of one of the two annular pawls 43 and the other end is connected to the connecting post 431 of the other one of the annular pawls 43. The tension spring 21 applies an elastic force on the two annular pawls 43 and generates a force on the two annular retaining frames 42 to maintain the clamped state, causing the two annular retaining frames 42 to keep clamping the external shaft. In other embodiments, the tension spring 21 can be configured in other ways to achieve the same functionality.

Referring to FIG. 10, FIG. 11, and FIG. 29, in this embodiment, an inner side of each of the two annular pawls 43 is provided with several first protrusions 432 along a radial direction of the annular pawl 43. The several first protrusions 432 are arranged at intervals in a circumferential direction of the annular pawls 43. Two adjacent ends of the two annular retaining frames 42 are provided with several second protrusions 421 along an axial direction of the annular retaining frames 42. The several second protrusions 421 are arranged at intervals in a circumferential direction of the annular retaining frames 42. The several second protrusions 421 of each annular retaining frame 42 are staggered with the several first protrusions 432 of the corresponding annular pawl 43, and each second protrusion 421 is clasped between two adjacent first protrusions 432.

In this embodiment, when the composite bearing is produced and assembled, the two annular pawls 43 are first inserted into the housing 10 through the pawl mounting port K3, and then the two annular retaining frames 42 are respectively inserted through the two ends of the housing 10, making the two annular retaining frames 42 interlock with the two annular pawls 43. The annular pawls 43 are connected to the annular retaining frames 42 by fitting and clasping the several first protrusions 432 to the several second protrusions 421, without any needs of additional connecting members for fixation. This method of installation is convenient and ensures a high precision connection. In other embodiments, the annular pawls 43 and the annular retaining frames 42 can adopt other connection methods.

Referring to FIG. 10 and FIG. 15, in this embodiment, an inner wall of the housing 10 is defined with an annular pawl positioning groove 15. The pawl mounting port K3 is defined on a bottom surface of the pawl positioning groove 15. The two annular pawls 43 are fitted and clasped in the pawl positioning groove 15. In this embodiment, the two annular pawls 43 are contacted and mounted in the pawl positioning groove 15, preventing the annular pawls 43 from deflecting in the axial direction, and ensuring a stable drive of the annular pawls 43 to the annular retaining frames 42 in the circumferential direction.

There are many implementation schemes for the unlocking assembly 30 in the present disclosure, and the following will introduce several implementation schemes of the unlocking assembly 30.

Referring to FIG. 1, FIG. 4, FIG. 6, FIG. 7, and FIG. 8, in some embodiments, the unlocking assembly 30 includes an operating member 31 configured for handheld operation and a pulling rope 32. The operating member 31 is arranged on the housing 10. The pulling rope 32 has two ends with one end connecting to one of the two locking assemblies 40 and the other end connecting to the other one of the locking assemblies 40. The operating member 31 is connected to the pulling rope 32 to pull the two locking assemblies 40 to rotate in opposite directions through the pulling rope 32, causing the rolling members 41 of the two locking assemblies 40 to release the external shaft. One end of the pulling rope 32 is connected to one of the two annular retaining frames 42, and the other end of the pulling rope 32 is connected to the other one of the annular retaining frames 42. The operating member 31 applies force to the pulling rope 32 to keep the pulling rope 32 to be in a taut state. One end of the pulling rope 32 applies driving force to one of the two annular retaining frames 42, and the other end of the pulling rope 32 applies driving force to the other one of the annular retaining frames 42, pulling the two annular retaining frames 42 to rotate in opposite directions, causing the rolling members 41 of the two annular retaining frames 42 move away from the axis of the through hole K2 to release the external shaft within the through hole K2. The pulling rope 32 may be a steel wire rope having high strength and long service life. In this embodiment, the pulling rope 32 is connected to the two annular pawls 43 through the pawl mounting port K3. One end of the pulling rope 32 is connected to one of the two connecting posts 431, and the other end of the pulling rope 32 is connected to the other one of the connecting posts 431, making the connection between the pulling rope 32 and the annular retaining frames 42 more convenient and simple.

Referring to FIG. 1 and FIG. 2, in some embodiments, the operating member 31 includes a knob rotatably arranged on the housing 10. An end of the knob along its axial direction is connected to the pulling rope 32, and the two annular retaining frames 42 are driven to rotate in opposite directions by the pulling rope 32 by way of twisting the knob. The knob served as the operating member 31 is twisted to tighten the pulling rope 32 and gradually wound by the knob. One end of the pulling rope 32 applies driving force to one of the two annular retaining frames 42, and the other end of the pulling rope 32 applies driving force to the other one of the annular retaining frames 42, pulling the two annular retaining frames 42 to rotate in opposite directions, causing the rolling members 41 of the two annular retaining frames 42 move away from the axis of the through hole K2 to release the external shaft within the through hole K2. After releasing the knob, retracting force of the knob on the pulling rope 32 disappears. Under the elastic force of the transmission assembly 20 on the two annular retaining frames 42, the two annular retaining frames 42 reset, so that the rolling members 41 of the two annular retaining frames 42 move close to the axis of the external shaft to clamp the external shaft. At the same time, a retracting part of the pulling rope 32 is released.

Furthermore, in this embodiment, an outer side of the housing 10 is provided with two first mounting arms 12 arranged at intervals and facing to each other. The knob is rotatably arranged at a top of the two first mounting arms 12 (the top is an end of the first mounting arms 12 away from the mounting hole K1). An end of the knob close to the mounting hole K1 is positioned over a middle portion of the pulling rope 32, and the middle portion of the pulling rope 32 is threaded through or hanged on an end of the knob close to the mounting hole K1. This embodiment is only one installation and setting scheme for the knob. In other embodiments, the knob may also adopt other installation and setting schemes.

Furthermore, in this embodiment, both sides of the knob are provided with a first limiting rod 121 respectively, and the two first limiting rods 121 are located between the two first mounting arms 1. The two first limiting rods 121 are located between two ends of the pulling rope 32, one of the two first limiting rods 121 presses the pulling rope 32 on a side of the knob, and the other one of the first limiting rods 121 presses the pulling rope 32 on the other side of the knob. The two first limiting rods 121 limit and guide the pulling rope 32, making the knob smoother and more stable when retracting and releasing the pulling rope 32, and making the unlocking operation more convenient. The two first mounting arms 12 limit the pulling rope 32 to prevent the pulling rope 32 from detaching during retracting process.

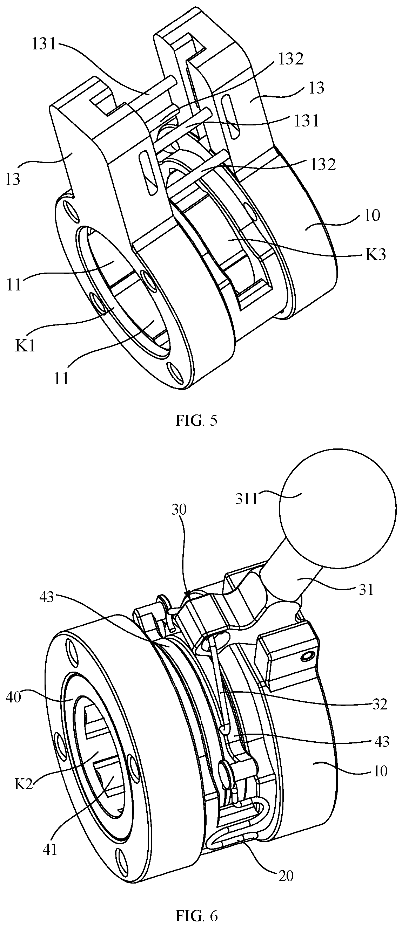

Referring to FIG. 4 and FIG. 5, in some embodiments, the operating member 31 includes a button. An end of the button acts on the pulling rope 32, by way of pressing down the pulling rope 32, to drive the two annular retaining frames 42 to rotate in opposite directions. The button served as the operating member 31 is pressed down to depress the pulling rope 32, causing the pulling rope 32 to tighten and gradually pulling the two annular retaining frames 42 to rotate in opposite directions, so that the rolling members 41 of the two annular retaining frames 42 move away from the axis of the through hole K2 to release the external shaft within the through hole K2. After releasing the button, retracting force of the button on the pulling rope 32 disappears. Under the elastic force of the transmission assembly 20 on the two annular retaining frames 42, the two annular retaining frames 42 reset, so that the rolling members 41 of the two annular retaining frames 42 move close to the axis of the external shaft to clamp the external shaft. At the same time, the retracting part of the pulling rope 32 is released.

Furthermore, in this embodiment, the outer side of the housing 10 is provided with two second mounting arms 13 arranged at intervals and facing to each other. The button is slidably connected to the two second mounting arms 13 along a direction toward the mounting hole K1. Both sides of the button are provided with a second limiting rod 131 respectively, the two limiting rods 131 are located between the two second mounting arms 13. The middle portion of the pulling rope 32 hangs on the two second limiting rods 131, and an end of the button close to the mounting hole K1 is pressed against the middle portion of the pulling rope 32. When pressing the button, the button slides relative to the second mounting arms 13 along a direction towards the mounting hole K1. The middle section of the pulling rope 32 experiences pressure from the button. As the button gradually moves close to the mounting hole K1, the function of the second limiting rods 131 is similar to a fixed pulley. The middle section of the pulling rope 32 gradually pulls two side sections of the pulling rope 32 towards the space between the two second limiting rods 131, causing the two ends of the pulling rope 32 to pull the two annular retaining frames 42 to rotate in opposite directions, gradually moving close to the button. When releasing the button, under the elastic force of the transmission assembly 20, the two annular retaining frames 42 gradually reset, causing the two ends of the pulling rope 32 to move away from the button. The middle section of the pulling rope 32 exerts a force on the button, causing the button to move away from the mounting hole K1 and reset. It should be noted that in this embodiment, the described structure of the button driving the pulling rope 32 is just one design. In other embodiments, alternative structural designs for the button to drive the pulling rope 32 could be employed.

Furthermore, in this embodiment, both sides of the button are provided with a third limiting rod 132 respectively, the two third limiting rods 132 are located between the two second mounting arms 13. The third limiting rods 132 are located between the second limiting rods 131 and the mounting hole K1. One of the two third limiting rods 132 presses the pulling rope 32 on a side of the button, and the other one of the third limiting rods 132 presses the pulling rope 32 on the other side of the button. The two third limiting rods 132 limit and guide the pulling rope 32, making the knob smoother and more stable when retracting and releasing the pulling rope 32, and making the unlocking operation more convenient and reliable. The two second mounting arms 13 limit the pulling rope 32 to prevent the pulling rope 32 from detaching during retracting process.

In some embodiments, the button and one of the two second mounting arms 13 is provided with a telescopic spring (unlabeled), and the button and the other one of the second mounting arms 13 is provided with another telescopic spring. The telescopic spring applies an elastic force to the button along a direction away from the mounting hole K1. Thus, when the button is released from the pressed state, under the elastic force of the telescopic springs, the button is capable to quickly reset and spring up. Under the elastic force of the transmission assembly 20 on the two annular retaining frames 42, the annular retaining frames 42 can reset more rapidly, facilitating a faster transition back to the locked state. This accelerates speed of switching the unlocked state and the locked state of the composite bearing, allowing users to quickly lock when adjusting to the desired angle, avoiding a slow locking process that might lead to jitter-induced angle deviations.

Referring to FIG. 6, in some embodiments, the operating member 31 includes a trigger articulated with the housing 10. The pulling rope 32 hangs on an end of the trigger, and the other end of the trigger defines an operating portion 311. The two annular retaining frames 42 are driven to rotate in opposite directions by way of pulling the pulling rope 32 outward by the trigger. The operating portion 311 of the trigger served as the operating member 31 is pulled, causing the trigger to rotate around a pivot axis of the trigger. The other end of the trigger pulls the pulling rope 32, causing the pulling rope 32 to tighten. One end of the pulling rope 32 applies driving force to one of the two annular retaining frames 42, and the other end of the pulling rope 32 applies driving force to the other one of the annular retaining frames 42, pulling the two annular retaining frames 42 to rotate in opposite directions, causing the rolling members 41 of the two annular retaining frames 42 move away from the axis of the through hole K2 to release the external shaft within the through hole K2. Once releasing the trigger, the pulling force on the pulling rope 32 by the trigger disappears. Under the elastic force of the transmission assembly 20 on the two annular retaining frames 42, the two annular retaining frames 42 reset, causing the rolling members 41 of the two annular retaining frames 42 move close to the axis of the external shaft and clamp the external shaft. It should be noted that, FIG. 6 shows a schematic diagram in which the two ends of the pulling rope 32 are not connected to the annular retaining frames 42.

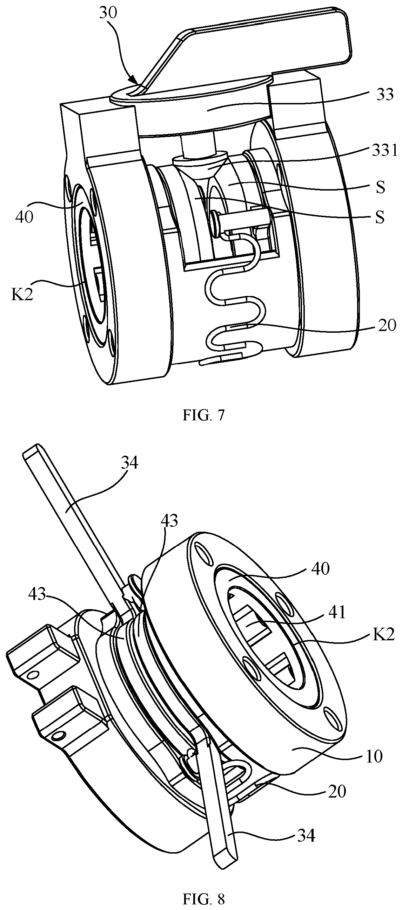

Referring to FIG. 7, in some embodiments, the unlocking assembly 30 includes a rotating member 33 arranged on the housing 10. An axis (axle center) of the rotating member 33 is perpendicular to the axis of the through hole K2. An end of the rotating member 33 is provided with a rotating bevel gear 331, and two adjacent ends of the two locking assemblies 40 are engaged with the rotating bevel gear 331. The rotating member 33 rotates the rotating bevel gear 331 to drive the two annular retaining frames 42 to rotate in opposite directions. One of the two adjacent ends of the two annular retaining frames 42 and the rotating bevel gear 331 may be driven in such a manner: both two adjacent ends of the two annular retaining frames 42 are connected to the rotating member 33, and the rotating member 33 is provided with gear surface S that meshes with the rotating bevel gear 331. Alternatively, both two adjacent ends of the two annular retaining frames 42 are provided with gear surface S that meshes with the rotating bevel gear 331.

In this embodiment, the unlocking assembly 30 is provided with the rotating bevel gear 331 to rotate the rotating member 33 clockwise or counterclockwise, making the two annular retaining frames 42 to rotate in opposite directions, causing the rolling members 41 to move away from the axis of the through hole K2 to release the external shaft within the through hole K2. After releasing the rotating member 33, under the elastic force of the transmission assembly 20 on the two annular retaining frames 42, the two annular retaining frames 42 rotate to reset, causing the rolling members 41 of the two annular retaining frames 42 to move close to the axis of the external shaft and clamp the external shaft. Meanwhile, the rotating bevel gear 331, driven by the resetting rotation of the two annular retaining frames 42, rotates in the opposite direction to reset.

Referring to FIG. 8, in some embodiments, the unlocking assembly 30 includes two levers 34. One of the two levers 34 is connected to one of the two annular retaining frames 42, and the other one of the levers 34 is connected to the other one of the annular retaining frames 42. The two levers 34 served as the unlocking assembly 30 are pulled in opposite directions, so as to drive the two annular retaining frames 42 to rotate in opposite directions, causing the rolling members 41 to release the external shaft within the through hole K2 to achieve unlocking. After releasing the levers 34, under the elastic force of the transmission assembly 20 on the two annular retaining frames 42, the two annular retaining frames 42 rotate to reset, causing the rolling members 41 to return to clamp the external shaft. In this embodiment, the rotating bevel gear 331 and the levers 34 are connected to the two annular pawls 43 through the pawl mounting port K3.

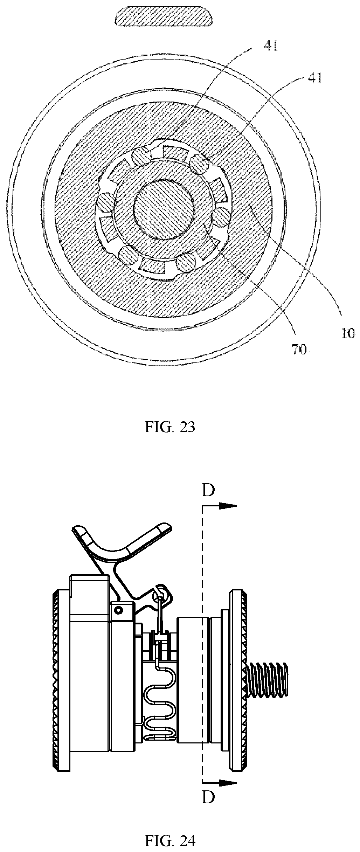

Referring to FIG. 9, FIG. 10, and FIG. 14, in this embodiment, the unlocking assembly 30 includes a trigger 35 and a wire rope 36. One end of the wire rope 36 is connected to the connecting post 431 of one of the two annular pawls 43, and the other end of the wire rope 36 is connected to the connecting post 431 of the other one of the annular pawls 43. The trigger 35 is articulated with the outer wall of the housing 10. An end of the trigger 35 is connected to a middle portion of the wire rope 36, and the other end of the trigger 35 defines an operating end. When users press or manipulate the operating end of the trigger 35, the trigger 35 rotates around a pivot axis of the trigger 35, causing the end of the trigger 35 to pull the wire rope 36 (referring to FIG. 24). The wire rope 36 applies force on the two connecting posts 431, driving the two annular pawls 43 to rotate in opposite directions, thereby driving the rotation of the two annular retaining frames 42, and causing the rolling members 41 of the two annular retaining frames 42 to release the external shaft. When users release the trigger 35, under the elastic force of the tension spring 21 on the two annular pawls 43, the two annular pawls 43 rotate back to initial positions, causing the rolling members 41 to return to clamp the external shaft.

In some embodiments, the trigger 35 has an L-shaped structure. A section of the L-shaped trigger 35 is set along the axial direction of the housing 10. One end of the section is provided with a hook through which the wire rope 36 is hung. A corner of the L-shaped trigger 35 is articulated with the housing 10 through a cylindrical pin. The other section of the L-shaped trigger 35 extends radially outward along the housing 10, and one end of the section is provided with an operating end that is convenient for users to press. In other embodiments, the trigger 35 may be other structures.

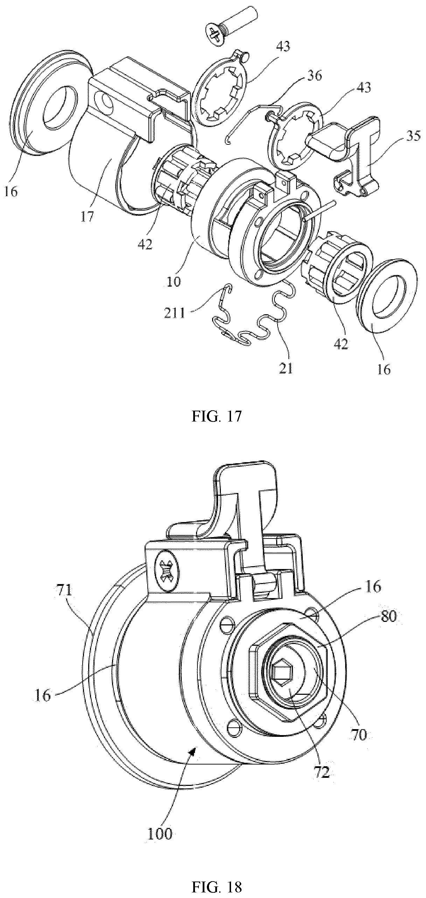

Referring to FIG. 16 and FIG. 17, in this embodiment, both two ends of the housing 10 are provided with a flat bearing 16. An end of the annular retaining frames 42 close to the flat bearing 16 resists the flat bearing 16. The ends of the housing 10 may be defined with corresponding stepped grooves, and an end of the flat bearing 16 may engaged in the stepped groove. By providing the flat bearing 16, when the axial force generated by the external shaft on the rolling members 41 acts on the annular retaining frames 42, the annular retaining frames 42 are capable to apply the axial force to the corresponding flat bearing 16. This ensures better load-bearing performance of the composite bearing, enabling the composite bearing to withstand greater load weight and have wider applicability. The flat bearing 16 may be made of lubricious materials such as PTFE or stainless steel.

In some embodiments, the housing 10 is provided with a shell 17. The shell 17 wraps around components such as the pawl mounting port K3, the connecting posts 431, the tension spring 21, and the wire rope 36 on the housing 10, giving the overall appearance a neat and tidy look.

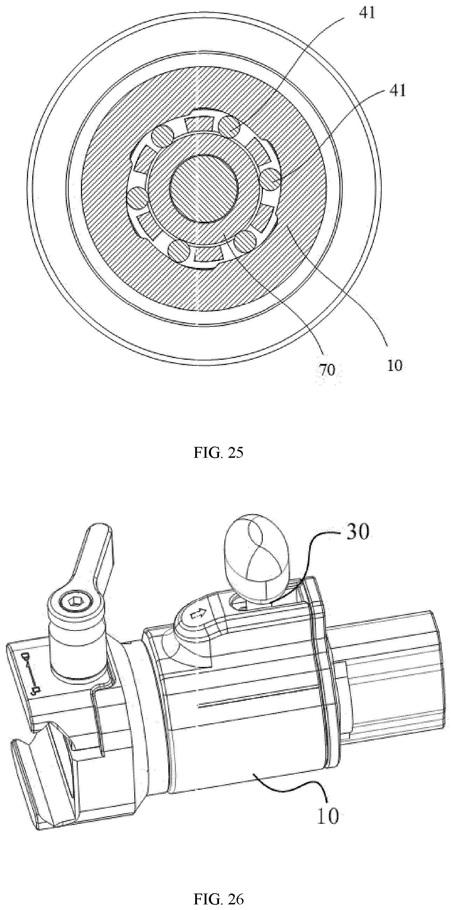

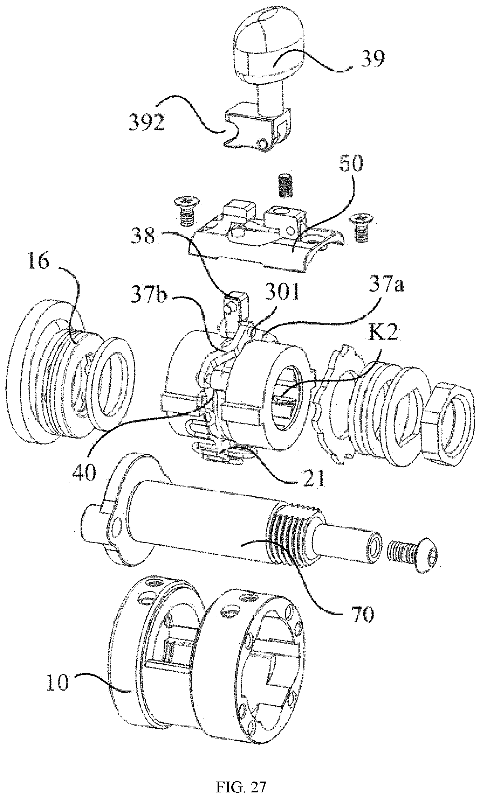

Referring to FIG. 26 and FIG. 27, in this embodiment, the unlocking assembly 30 includes a first pulling member 37a, a second pulling member 37b, a connecting member 38, and an unlocking member 39. An end of the first pulling member 37a is rotatably connected to one of the locking assemblies 40, and the other end of the first pulling member 37a is rotatably connected to the other connecting member 38. An end of the second pulling member 37b is rotatably connected to the other one of the locking assemblies 40, and the other end of the second pulling member 37b is rotatably connected to the other end of the connecting member 38. The first pulling member 37a, the second pulling member 37b, and the connecting member 38 can be separately designed to facilitate the simultaneous drive of the first pulling member 37a and the second pulling member 37b by the connecting member 38, preventing deformation and jamming during prolonged use.

Users can drive the connecting member 38 to move upward by operating the unlocking member 39, which in tum drives both the first pulling member 37a and the second pulling member 37b to rotate the two locking assemblies 40 simultaneously, causing the two locking assemblies 40 to release the external shaft within the through hole K2. In case the unlocking member 39 is not operated, the tension spring 21 can restore the clamping force of the two locking assemblies 40 on the external shaft through the elastic force on the two locking assemblies 40, preventing deformation and jamming during prolonged use. The operation of the unlocking member 39 is convenient and smooth.

In this embodiment, when the composite bearing is applied to the rotating joint of a photographic device, the joint spindle of the photographic device is inserted through the through hole K2 of the two locking assemblies 40 for installation. In case the unlocking member 39 is not operated, the two locking assemblies 40 maintain a clamped state on the joint spindle under the elastic force of the tension spring 21, making the joint spindle cannot rotate, and fixing the photographic device in a non-adjustable position. When the unlocking member 39 is operated, the unlocking member 39 drives the two locking assemblies 40 to rotate, causing the two locking assemblies 40 to release the joint spindle. At this time, the joint spindle can freely rotate in the through hole K2, allowing the photographic device to adjust the shooting angle. After the angle of the photographic device is settled, users release the unlocking member 39, and the locking assemblies 40 restores to the clamped state on the joint spindle under the elastic force of the tension spring 21, so as to lock the joint spindle of the photographic device.

In this embodiment, the composite bearing is provided with two locking assemblies 40 located within the housing 10 along the axial direction of the housing 10. The two locking assemblies 40 are defined with the through hole K2 along the axial direction for the external shaft to be inserted in. The tension spring 21 applies the elastic force to the two locking assemblies 40 to keep the two locking assemblies 40 clamping on the external shaft inserted in the through hole K2. The unlocking member 39, which is connected to and drives the two locking assemblies 40, is configured to drive the two locking assemblies 40 to release the external shaft. This enables the composite bearing to switch between clamping and rotational adjustment of the external shaft. Therefore, when using the composite bearing in the photographic device, it only requires inserting the joint spindle of the rotating joint into the through hole K2 of the locking assemblies 40 to achieve quickly switch between locked state and unlocked state of the joint spindle. This allows for quick rotation and adjustment of the shooting angle of the photographic device, effectively solving the problem of the inability to rotate and adjust the shooting angle of the photographic device timely to meet the different shooting needs.

Referring to FIG. 27, FIG. 28, FIG. 30, and FIG. 31, in this embodiment, the unlocking assembly 30 further includes a first shaft rod 301. The first shaft rod 301 has two ends with one provided with a first connecting portion 52 and the other provided with a second connecting portion 391. The first connecting portion 52 and the second connecting portion 391 are protruded on a front side and a rear side of the connecting member 38 respectively. The first shaft rod 301 and the connecting member 38 can be separately designed to facilitate the rotational connection between the first connecting portion 52 and the first pulling member 37a, as well as between the second connecting portion 391 and the second pulling member 37b. In other embodiments, the first shaft rod 301 and the connecting member 38 can also be integral.

In this embodiment, the composite bearing further includes a mounting seat 50 arranged on the housing 10. The mounting seat 50 is defined with a mounting port 51. An end of the connecting member 38 passing through the mounting port 51 is provided with a second shaft rod 302. The unlocking member 39 is rotatably connected to the mounting seat 50 through a third shaft rod 303, and the third shaft rod 303 is arranged parallel to the second shaft rod 302. The unlocking member 39 is defined with a slot 392 defined with an opening towards the second shaft rod 302. An outer peripheral wall of the second shaft rod 302 is engaged in the slot 392. The unlocking member 39 drives the second shaft rod 302 to move upward, i.e., the direction away from the mounting hole K1 to drive the connecting member 38 to move upward when the unlocking member 39 rotates in a first direction around the third shaft rod 303. The second shaft rod 302 and the first shaft rod 301 may be roughly set vertically, to save space and have a compact overall structure.

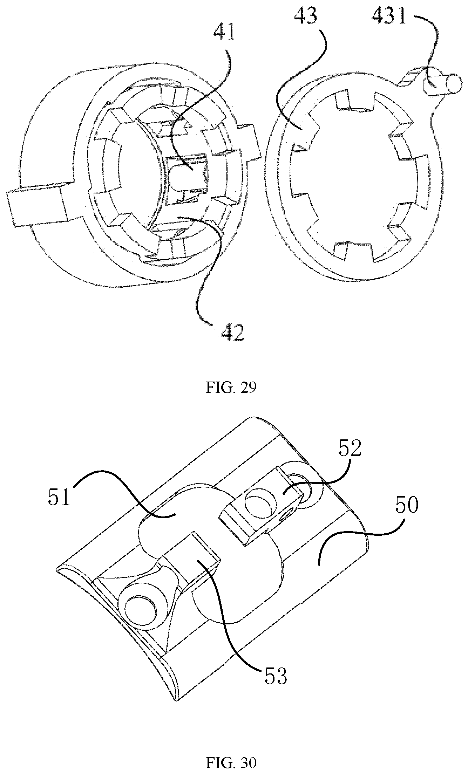

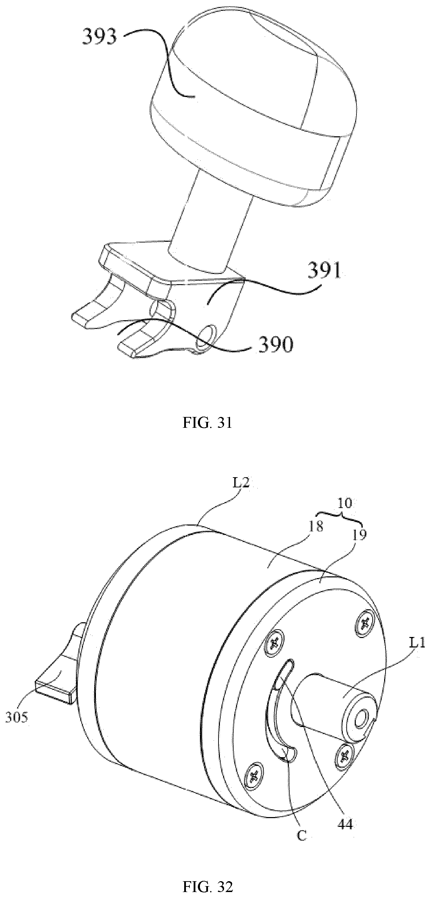

Referring to FIG. 30 and FIG. 31, in particular, an upper surface of the mounting seat 50 is provided with the first connecting portion 52. The unlocking member 39 includes the second connecting portion 391, and the second connecting portion 391 is defined with a connecting groove 390. The first connecting portion 52 passes through a bottom opening of the connecting groove 390 and is rotatably accommodated in the connecting groove 390. One of the two ends of the third shaft rod 303 protruded on one side of the first connecting portion 52 passes through one side wall of the connecting groove 390, and the other one of the ends of the third shaft rod 303 protruded on the other side of the first connecting portion 52 passes through the other side wall of the connecting groove 390. The connecting groove 390 and the slot 392 may be communicated, and the connecting groove 390 is defined with a lower side opening and a side opening facing to the side of the second shaft rod 302.

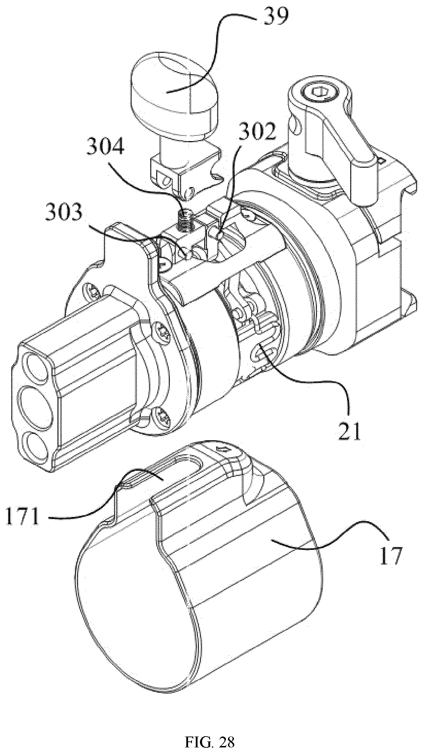

Referring to FIG. 27 and FIG. 28, furthermore, an elastic member 304 is provided between an inner wall of the connecting groove 390 and an upper surface of the first connecting portion 52. The elastic member 304 is located between the second shaft rod 302 and the third shaft rod 303. The elastic member 304 may be a spring, allowing the unlocking member 39 to have a load-bearing relationship with the first connecting portion 52 during the rotational process, rather than a rigid connection. This enhances tactile sensation and experience.

Referring to FIG. 27 and FIG. 31, furthermore, a lower wall of the slot 392 defines an expanded opening and has an inclined inner surface. The inclined inner surface allocates a pushing force to the second shaft rod 302, driving the connecting member 38 to move upward.

To facilitate manipulation of the unlocking member 39, an upper portion of the second connecting portion 391 is further connected with a manual portion 393, and an outer surface of the manual portion 393 is curved. Users can grasp the manual portion 393 to actuate the unlocking member 39, providing a similar sensation to manually shifting gears, while also maintaining an aesthetically pleasing appearance. The size of the manual portion 393 can be designed to fit user's hand and size.

To prevent wobbling or deviation of the connecting member 38 during vertical movement, an upper surface of the mounting seat 50 is further provided with a limiting portion 53 opposite to the first connecting portion 52. The first connecting portion 52 and the limiting portion 53 extend radially above the mounting port 51. An end of the connecting member 38 passing through the mounting port 51 stands between the first connecting portion 52 and the limiting portion 53. This allows the connecting member 38 to move through and be constrained within the space formed between the first connecting portion 52 and the limiting portion 53, ensuring stable operation.

In summary, by gripping the manual portion 393 and pulling the manual portion 393 in the first direction, the second connecting portion 391 rotates around the third shaft rod 303 in the first direction, and the second shaft rod 302 within the slot 392 slides along the inclined inner surface of the slot 392. This allows the connecting member to move upward, causing the first pulling member 37a to apply force to one of the two connecting posts 431 and the second pulling member 37b to apply force to the other one of the connecting posts 431, bringing the first pulling member 37a and the second pulling member 37b to move closer to each other. Consequently, the two annular pawls 43 rotate in opposite directions (relative direction), achieving the rotation of the two annular retaining frames 42, causing the rolling members 41 of the two annular retaining frames 42 to release the external shaft. When releasing the manual portion 393, the second connecting portion 391 rotates around the third shaft rod 303 in the second direction, under the elastic force of the tension spring 21 on the two annular pawls 43, the two annular pawls 43 return to the initial positions, causing the rolling members 41 to return to clamp the external shaft. The rotation direction of the first direction and the second direction are opposite, for example, the first direction could be clockwise, and the second direction could be counterclockwise.

Referring to FIG. 27, in this embodiment, one end of the housing 10 is provided with the flat bearing 16, the other end of the housing 10 is provided with several spacers secured by nuts. One end of the external shaft may be provided with a clamping component, and the other end can be threaded to the photographic device. The connection method is not limited, and could include a cold shoe slider, Arca-Swiss components, and so on.

Referring to FIG. 28, in some embodiments, the housing 10 is provided with the shell 17. The shell 17 wraps around components such as the mounting seat 50, the connecting posts 431, and the tension spring 21 on the housing 10, to provide a clean overall appearance. The manual portion 393 passes through an elongated groove 171 defined on outer side of the shell 17 for operation.

In some embodiments, a difference between a maximum distance and a minimum distance from the contacting portions 11 to the axis of the mounting hole K1 is set as L. The L is the distance that the contacting portions 11 pushes the rolling elements 41 in the direction of the axis of the mounting hole K1. The L is ranged from 0.3 millimeter (mm) to 1.5mm, for example, the L is 0.5mm, 0.7mm, 0.9mm, 1mm, 1.2mm, or 1.3mm.

In some embodiments, the L is within 0.5mm. That is to say, the distance between the contacting portions 11 and the axis of the housing 10 is within 0.5mm. This means that when the rolling members 41 of the locking assemblies 40 release the external shaft for rotational adjustment, the gap between the rolling members 41 and the external shaft is very small, ensuring that the external shaft does not shake and enabling stable rotational adjustment relative to the composite bearing.

In some embodiments, a ratio of the L to a radius of the rolling member 41 is 0.1 to 0.6, such as 0.5, 0.4, 0.3, or 0.2.

In some embodiments, a diameter of the mounting hole K1 is set as R, and a ratio of the L to the R is 0.012 to 0.05, such as 0.01, 0.015, 0.025, 0.03, 0.04, or 0.045.

In some embodiments, an outer diameter of the housing 10 is within 25mm. With this size, the overall dimensions of the composite bearing are compact, allowing the composite bearing to be installed in various small spaces within the photographic devices. The composite bearing can be applied to multiple types of photographic devices, which is high universality. Additionally, the compact size allows for hidden installation without being exposed on the outside of the photographic device, ensuring a clean and neat appearance.

In some embodiments, a radius of the rolling member 41 is ranged from 0.3mm to 20mm, for example, the radius of the rolling member 41 is 1mm, 2mm, 3mm, 4mm, 5mm, 6mm, 8mm, 10mm, 13mm, 15mm, 18mm, or 20mm.

By adopting the dimensional data mentioned in the above embodiments, the rotational adjustment and locked state of the composite bearing can be ensured to be stable and reliable.

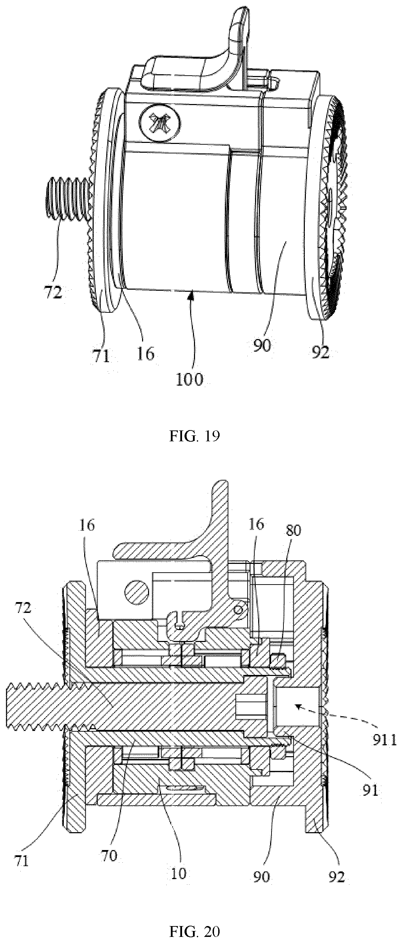

Referring to FIG. 18 and FIG. 20, the present disclosure further provides a rotating assembly, and the rotating assembly includes a rotating shaft 70 and the composite bearing 100. The specific structure of the composite bearing 100 refers to the above embodiments. Since the rotating assembly adopts all the technical solutions of the composite bearing 100 in the aforementioned embodiments, the rotating assembly has at least all the beneficial effects brought by the technical solutions in those embodiments, which will not be repeated here. The rotating shaft 70 is inserted through the through hole K2 of the two locking assemblies 40 of the composite bearing 100.

In this embodiment, the rotating assembly further includes a locking nut 80. A first end of the rotating shaft 70 is provided with a coaxial first toothed disk 71, and a second end of the rotating shaft 70 is provided with external threads. The locking nut 80 threads onto the second end of the rotating shaft 70, and the composite bearing 100 is clamped between the first toothed disk 71 and the locking nut 80. One end of the rotating shaft 70 resists on one end of the composite bearing 100 by the toothed disk, and the other end of the rotating shaft 70 resists on the other end of the composite bearing 100 by the locking nut 80, fixing the rotating shaft 70 in the axial direction of the composite bearing 100 to prevent the rotating shaft 70 from moving along the axial direction. The first toothed disk 71 is configured to secure installation with other photographic devices (such as a cage).

In some embodiments, the first toothed disk 71 abuts on the flat bearings 16 at one end of the composite bearing 100, and the locking nut 80 abuts on the flat bearings 16 at the other end of the composite bearing 100, ensuring the strong axial load-bearing capacity of the rotating assembly. The flat bearing 16 is made of a lubricious material (such as PTFE or POM), so as to provide minimal friction resistance for the rotation of the rotating shaft 70 to realize smoother rotational adjustment.

Referring to FIG. 19 to FIG. 21, in this embodiment, the rotating assembly further includes an installing screw 72 and a base 90. The rotating shaft 70 is defined with a hollow shaft. An inner wall of the second end of the rotating shaft 70 is provided with a step. The installing screw 72 is inserted through the hollow shaft. An head end of the installing screw 72 is clasped on the step. An threaded end of the installing screw 72 extends out of the first end of the rotating shaft 70. The base 90 is installed and fixed at an end of the composite bearing 100 away from an end of the first toothed disk 71. A side of base 90 facing the composite bearing 100 is provided with a limiting column 91, and the limiting column 91 is inserted into the second end of the rotating shaft 70. The limiting column 91 is defined with via holes 911 passed through the base 90 along an axial direction of the limiting column 91. An end of the base 90 away from the composite bearing 100 is provided with a second toothed disk 92. The limiting column 91 is configured to prevent the installing screw 72 from coming out of the rotating shaft 70. The installing screw 72 is positioned and limited within the rotating shaft 70 by the step and the limiting column 91. The via hole 911 allows tools such as screwdrivers to reach into the rotating shaft 70 and rotate the installing screw 72 (the installing screw 72 may be a countersunk screw), enabling the installing screw 72 to be fastened with other components through the threaded interface. The base 90 may be securely fixed to the housing 10 using multiple screws or other fixing methods.

In this embodiment, when installing and using the rotating assembly, one end of the rotating assembly is connected to a photographic device by screwing the installing screw 72 through the via hole 911 of the limiting column 91. The threaded end of the installing screw 72 is screwed into the threaded interface of the photographic device. The first toothed disk 71 meshes with the toothed disk on the photographic device to achieve circumferential fixation. The other end of the rotating assembly is installed with another photographic device by the second toothed disk 92. The via hole 911 can be internally threaded to allow for screwing and fixing with a screw of another photographic device.

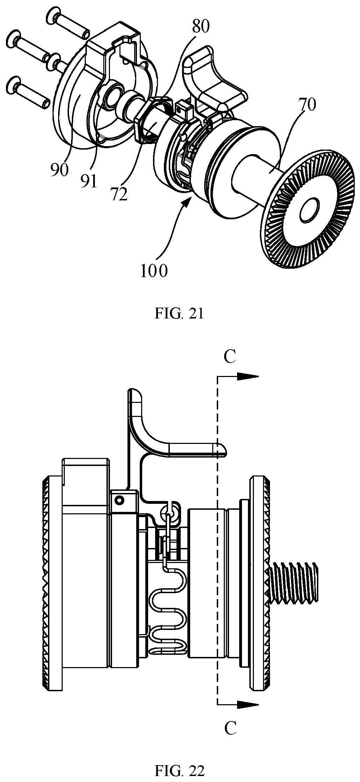

Referring to FIG. 22 to FIG. 25, in this embodiment, in case the trigger 35 is not operated, the rotating assembly is in the locked state, and the rolling members 41 of the locking assemblies 40 clamp the rotating shaft 70 to lock and fix the rotating shaft 70. When the trigger 35is pressed, the trigger 35 pulls the wire rope 36, causing the locking assemblies 40 to rotate, and the rolling members 41 to release the rotating shaft 70, allowing the rotating shaft 70 to rotate freely. In this embodiment, the rotating assembly is provided with the composite bearing 100 as mentioned above, which has a small overall size. As the rotating joint for the photographic devices, the rotating assembly reduces the overall dimensions of the photographic devices. By pressing the trigger 35 to unlock the rotating shaft 70, it enables quick adjustment of the shooting angle of the photographic devices, improving the experience of handheld or shoulder shooting.

The present disclosure provides a rotating assembly that can be applied to a photographic device (such as a magic adapter, a quick-release plate, a handle, a tripod, and a shoulder mount) to serve as a rotating joint of the photographic device. The photographic device installed with the rotating assembly may be connected and rotated with another photographic device through the rotating assembly. One of the photographic devices may be connected to a photographic equipment to adjust and lock the photographic equipment quickly.

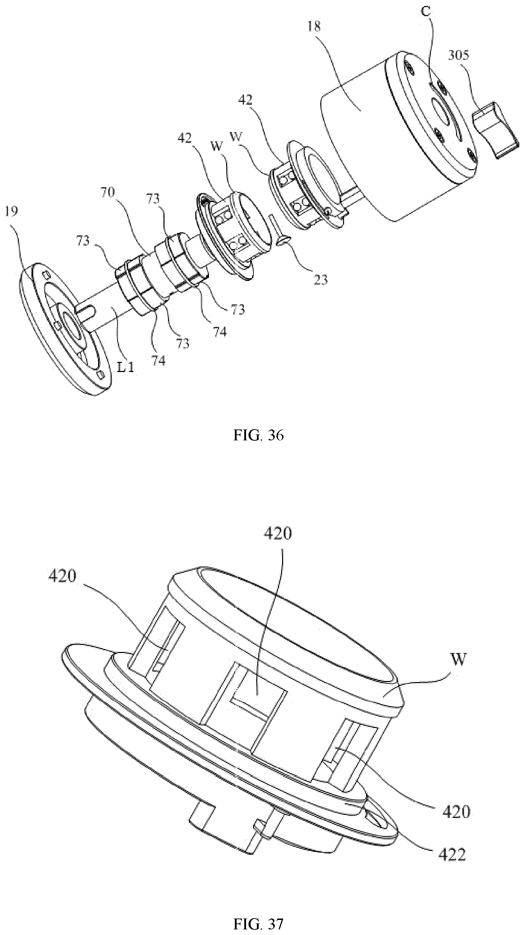

Referring to FIG. 32 to FIG. 36, in this embodiment, the rotating assembly includes the rotating shaft 70 and the composite bearing. The composite bearing includes the housing 10, the transmission assembly 20, the unlocking assembly 30, and the two locking assemblies 40.

The rotating shaft 70 is inserted into the two locking assemblies 40. An outer peripheral wall of the rotating shaft 70 is provided with two protrusions 73 corresponding to the two annular retaining frames 42. The protrusions 73, corresponding to one of the annular retaining frames 42, have heights gradually increases in a second circumferential direction of the rotating shaft 70 (such as clockwise or counterclockwise); and the protrusions 73, corresponding to the other annular retaining frame 42, have heights gradually decreases in the second circumferential direction of the rotating shaft 70. The rolling members 41 are located between the protrusions 73 and the inner wall of the mounting hole K1. In this embodiment, there is no contacting portions 11 provided on the inner peripheral wall of the housing 10. It can be understood that the rotating assembly may be only provided with the contacting portions 11 on the inner peripheral wall of the housing 10, causing the rolling members 41 to clamp or release the rotating shaft 70. Alternatively, the rotating assembly may be only provided with the protrusions 73 on the outer peripheral wall of the rotating shaft 70, causing the rolling members 41 to clamp or release the rotating shaft 70.

The two annular retaining frames 42 are driven together by the transmission assembly 20. The transmission assembly 20 is configured to drive one of the second annular retaining frames 42 to rotate in the opposite direction when the other first annular retaining frame 42 rotates, establishing a link between the two annular retaining frames 42.

In this embodiment, the working principle of the rotating assembly is as follows: first, when the rotating assembly needs to be locked, one of the annular retaining frames 42 (referred to as the first annular retaining frame 42) is rotated in a third direction (e.g., clockwise or counterclockwise) relative to the housing 10. The rotation of the first annular retaining frame 42 in the third direction drives the other annular retaining frame 42 (referred to as the second annular retaining frame 42) in the opposite direction (referred to as a fourth direction) relative to the housing 10 through the transmission assembly 20. This causes the rolling members 41 of the two annular retaining frames 42 to move between the higher end of the protrusions 73 and the inner wall of the mounting hole K1. One side of the rolling members 41 is pressed against the protrusions 73, and the other side of the rolling members 41 is pressed against the inner wall of the mounting hole K1, increasing the friction between the rolling members 41 and the protrusions 73, as well as the friction between the rolling members 41 and the inner wall of the mounting hole K1. This locks the rotating shaft 70 to the housing 10 through the rolling members 41. Additionally, since the heights of the protrusions 73 corresponding to the two annular retaining frames 42 increase in opposite directions, when the rolling members 41 are pressed against between the protrusions 73 and the inner wall of the housing 10, whatever the rotating shaft 70 or the housing 10 is rotated clockwise or counterclockwise, the rolling members 41 of one of the annular retaining frames 42 will contact tighter with both the protrusions 73 and the housing 10, ensuring a stable and reliable locked state. Second, when the rotating assembly needs to be unlocked, the first annular retaining frame 42 rotates in the fourth direction relative to the housing 10, and the transmission assembly 20 drives the second annular retaining frame 42 to rotate in the third direction relative to the housing 10. This causes the rolling members 41 of the two annular retaining frames 42 to move from between the higher end of the protrusions 73 and the inner wall of the mounting hole K1 to between the lower end of the protrusions 73 and the inner wall of the mounting hole K1. Both two ends of the rolling members 41 no longer press against the protrusions 73 and the inner wall of the mounting hole K1, greatly reducing the friction between the rolling members 41 and the inner wall of the mounting hole K1, as well as the friction between the rolling members 41 and the protrusions 73. This allows the rolling members 41 to freely rotate relative to the housing 10 and the protrusions 73, unlocking the rotating shaft 70 from the housing 10.

In this embodiment, when the rotating assembly is applied to the photographic device, the housing 10 is connected to one photographic device, and the rotating shaft 70 is connected to another photographic device. In this way, when setting the rotating assembly to the unlocked state, an angle between the two photographic devices can be adjusted quickly, and when setting the rotating assembly to the locked state, the two photographic devices can be locked at the current angle.

In this embodiment, the rotating assembly is provided with two annular retaining frames 42 rotatably arranged in the mounting hole K1 of the housing 10. The rotating shaft 70 is inserted into the annular retaining frames 42, and the mounting slots 420 of the annular retaining frame 42 are equipped with rolling members 41. The protrusions 73 corresponding to the rolling members 41 are provided on the outer peripheral wall of the rotating shaft 70. The height of the protrusions 73 corresponding to the two annular retaining frames 42 are increased in opposite directions, and the two annular retaining frames 42 are driven together by the transmission assembly 20. By rotating one of the annular retaining frames 42, the other annular retaining frame 42 is driven to rotate in the opposite direction through the transmission assembly 20, removing the rolling members 41 to press against between the higher end of the protrusions 73 and the inner wall of the mounting hole K1 to achieve the locked state of the rotating assembly. By rotating one of the annular retaining frames 42, the other annular retaining frame 42 is driven to rotate in the opposite direction, removing the rolling members 41 away from the protrusions 73 and the inner wall of the mounting hole K1, achieving the unlocked state of the rotating assembly. Therefore, when the rotating assembly is applied as a connecting member between photographic devices, the rotating assembly allows for quick adjustment and locking of the angle between the photographic devices, making it more convenient for users to adjust the desired shooting angle.

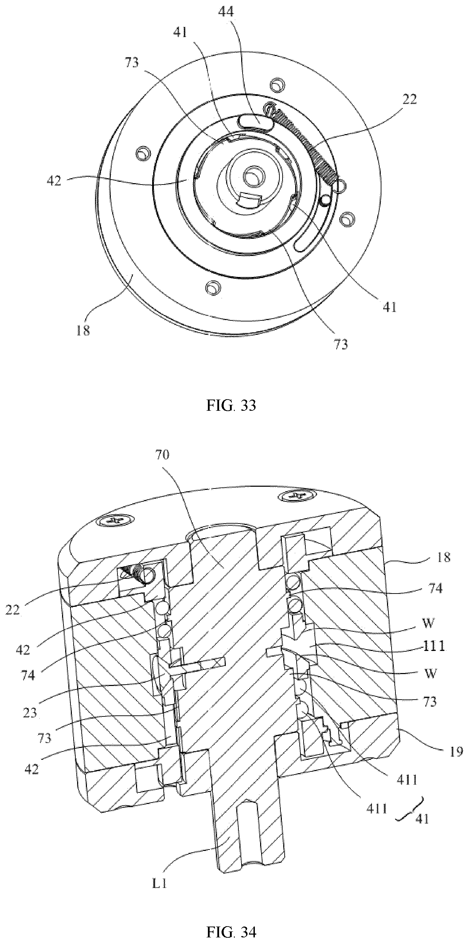

Referring to FIG. 34 to FIG. 36, and FIG. 38, in some embodiments, the outer peripheral wall of the rotating shaft 70 corresponding to each annular retaining frame 42 is further provided with an annular protrusion 74 respectively. The annular protrusion 74 is coaxial with the rotating shaft 70. The height of the annular protrusion 74 is greater than a maximum height of the protrusions 73. The rolling member 41 includes at least two rolling bodies 411, and each one of the at least two rolling bodies 411 is clamped in two sides of the corresponding annular protrusion 74 along an axial direction of the annular protrusion 74.

In this embodiment, the rotating assembly is provided with multiple rolling members 41, and each rolling member 41 includes at least two rolling bodies 411 with one of the rolling bodies 411 positioned on one side of the annular protrusion 74 and the other rolling body 411 positioned on the other side of the annular protrusion 74 along the axial direction, making the annular protrusion 74 cannot move along the axial direction. This ensures that when using the rotating assembly, the rotating shaft 70 will not move relative to the annular retaining frame 42, that is, the rotating shaft 70 will not move relative to the housing 10 along the axial direction, thus ensuring stability between the two photographic devices connected by the rotating assembly.

In some embodiments, at least some of the mounting slots 420 are provided with at least one partition (not shown in the drawings). The at least one partition divides the mounting slots 420 into at least two segments arranged along an axial direction of the annular retaining frame 42. One of the at least two rolling bodies 411 of the rolling members 41 is installed in one of the at least two segments, and the other rolling body 411 is installed in the other of the segment. By using multiple rolling bodies 411 of the rolling members 41 installed in the various segments of the mounting slots 420, the contact and cooperation between the rolling bodies 411 and the protrusions 73 and the inner wall of the housing 10 are more stable and reliable, resulting in a firmer and more stable locked state.

In this embodiment, the rolling members 41 are illustrated as two rolling balls, but in other embodiments, the rolling member 41 can be one or more rolling balls, or other rotatable components such as at least one cylinder, wheel, or discs parallel to the axis of the rotating shaft 70.

In some embodiments, a wall of the mounting hole K1 and/or the protrusions 73 are defined with raceways matching the rolling balls (not shown in the drawings). For example, the raceways can be annular guide grooves formed by the wall of the mounting hole K1 and/or the protrusions 73. The annular guide grooves can be formed by recesses in the wall of the mounting hole K1 and/or the protrusions 73, or formed between two annular protrusions 74. The annular guide grooves are coaxial with the rotating shaft 70. A part of the rolling balls is seated in the annular guide grooves. By adding raceways matching the rolling balls, the stability in the axial direction among the rolling balls, the rotating shaft 70, the annular retaining frame 42, and the housing 10 is enhanced, preventing the occurrence of axial movement of the rotating shaft 70 relative to the housing 10 or the annular retaining frame 42, ensuring stability between the two photographic devices connected by the rotating assembly in the locked state. In other embodiments, the raceways can also be other structures that can achieve the same functional effect.

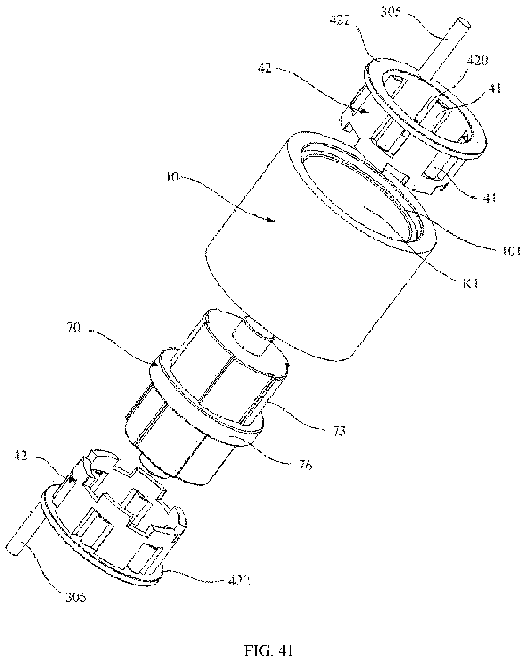

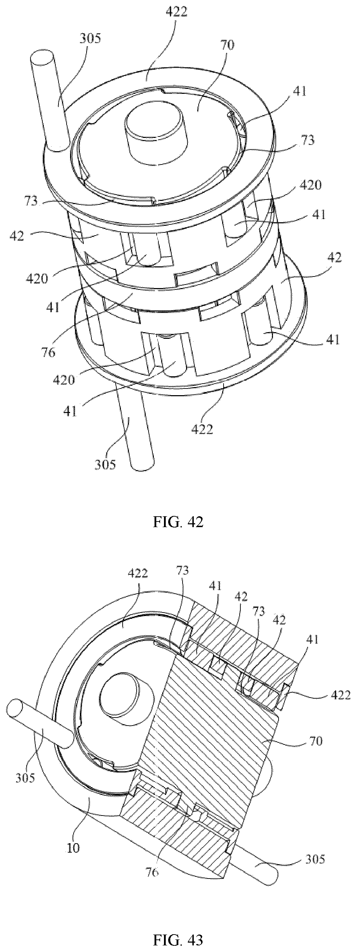

Referring to FIG. 34, FIG. 35, FIG. 37, FIG. 41 and FIG. 43, in some embodiments, both two ends of the housing 10 are provided with a limiting step 101 coaxial with the mounting hole K1. An end of the two annular retaining frames 42 away from each other is provided with an annular edge 422. The annular edge 422 of one of the two annular retaining frames 42 is clasped in the limiting step 101 on an end of the housing 10, and the annular edge 422 of the other one of the annular retaining frames 42 is clasped in the limiting step 101 on the other end of the housing 10. By setting the limiting steps 101 at both ends of the housing 10 and annular edges 422 on the outer end of the annular retaining frames 42 that match the limiting steps 101, the annular retaining frames 42 can be quickly positioned and installed on the housing 10 by simply inserting an inner end of the annular retaining frames 42 into one end of the mounting hole K1 and allowing the annular edges 422 to fit into the limiting steps 101. This achieves rapid positioning and installation of the retaining frames 42, which not only improves the installation speed of the annular retaining frames 42, but also ensures the installation accuracy of the retaining frames 42.

In some embodiments, the unlocking assembly 30 includes at least one handle portion 305. An end of at least one annular retaining frame 42 close to an end of the mounting hole K1 is provided with a handle portion 305. By setting the handle portion 305, it is more convenient for users to rotate and unlock the annular retaining frames 42. In this embodiment, as an example, the handle portion 305 includes a trigger. The handle portion 305 is rotated together with the annular retaining frames 42 by manipulating the trigger. In other embodiments, the handle portion 305 can be of other structures.

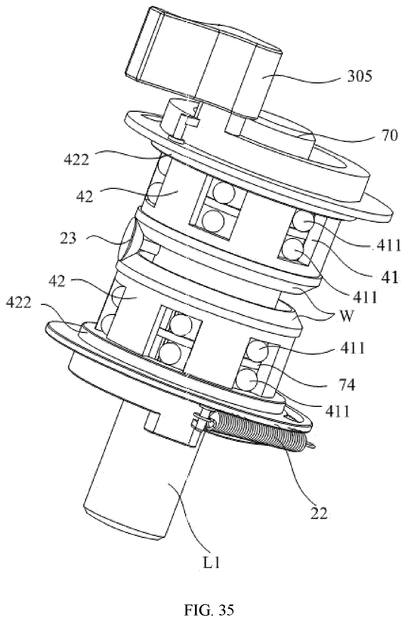

Referring to FIG. 33 and FIG. 35, in some embodiments, the transmission assembly 20 further includes a spring member 22 located on one side of the rotating shaft 70. An end of the spring member 22 is connected to the annular retaining frame 42, and the other end is connected to the housing 10. The spring member 22 drives the rolling members 41 to resist both the protrusions 73 and the housing 10, allowing the rotating shaft 70 and the housing 10 to be locked. In other words, the spring member 22 exerts an elastic force on the annular retaining frame 42 and the housing 10, causing the rolling members 41 on the annular retaining frame 42 to maintain a tendency to move towards the higher end of the protrusions 73, to keep the rolling members 41 resisting the protrusions 73 and the inner wall of the mounting hole K1 and maintain the locked state between the rotating shaft 70 and the housing 10. When unlocking, the annular retaining frame 42 is driven by external force to rotate in an unlocking direction, causing the rolling members 41 to move towards the lower end of the protrusions 73. As a result, the rolling members 41 disengage from the protrusions 73 and the inner wall of the mounting hole K1, completing the unlocking process. After the external force is removed, the annular retaining frame 42 automatically rotate in the locked direction under the elastic force of the spring member 22, restoring the locked state between the rotating shaft 70 and the housing 10.

In this embodiment, by adding the spring member 22 connected between the housing 10 and the annular retaining frame 42, the rotating assembly can be more stable and reliably maintained in the locked state, improving the reliability of locked state of the rotating assembly.

Referring to FIG. 34 to FIG. 36, in some embodiments, the transmission assembly 20 includes a transmission bevel gear 23 located between the two annular retaining frames 42. Two adjacent ends of the two annular retaining frames 42 are defined with a bevel gear surface W respectively. The transmission bevel gear 23 is rotatably installed on the outer peripheral wall of the rotating shaft 70, and the transmission bevel gear 23 meshes with the bevel gear surfaces W of the two annular retaining frames 42. In particular, when either annular retaining frame 42 is rotated, the bevel gear surface W of the annular retaining frame 42 drives the transmission bevel gear 23 to rotate, thereby driving the bevel gear surface W of the other annular retaining frame 42 through the transmission bevel gear 23, resulting in the rotation of the other annular retaining frame 42. In this embodiment, the transmission assembly 20 uses a solution of a single transmission bevel gear 23 engaging with two bevel gear surfaces W, which not only provides stable and reliable transmission but also has a simple structure. This allows the overall structure of the rotating assembly to be compact and can be installed in various confined spaces within the photographic device. The rotating assembly has high universality and can be discreetly installed without being exposed externally, ensuring a clean appearance for the photographic device.

It should be noted that in other embodiments, the transmission assembly 20 may adopt other combinations of gear transmission structures or other transmission structures.

Furthermore, in this embodiment, an inner wall of the mounting hole K1 is further defined with an annular avoid groove 111 positioned over the transmission bevel gear 23. Since the transmission bevel gear 23 is rotationally mounted on the outer peripheral wall of the rotating shaft 70, the transmission bevel gear 23 rotates along with the rotating shaft 70. To ensure that the housing 10 does not interfere with the rotation of the transmission bevel gear 23, the annular avoid groove 111 is defined on the inner wall of the mounting hole K1 to accommodate the movement of the transmission bevel gear 23.

Referring to FIG. 32 to FIG. 34, and FIG. 36, in some embodiments, the housing 10 includes a barrel body 18 defined with the mounting hole K1 and a cover body 19. An end of the barrel body 18 is defined with an opening, and the cover body 19 covers on the opening of the barrel body 18. The cover body 19 is defined with an avoiding hole, and the rotating shaft 70 is provided with a first connecting portion L1 extended out of the housing 10 through the avoiding hole. The first connecting portion L1 is configured to connect to the first photographic device. An end of the barrel body 18 away from the cover body 19 is provided with a second connecting portion L2, and the second connecting portion L2 is configured to connect to the second photographic device. In this embodiment, when using the rotating assembly, the first connecting portion L1 is connected to one photographic device, and the second connecting portion L2 is connected to another photographic device. This allows the angle between the two photographic devices to be adjusted by setting the rotating assembly to the unlocked state, and lock the two photographic devices at the current angle by setting the rotating assembly to the locked state. In other embodiments, the second connecting portion L2 can be arranged on any position on the outer wall of the barrel body 18.

Furthermore, both the cover body 19 and an end of the barrel body 18 away from the cover body 19, are defined with an arc-shaped groove C set around the axis of the rotating shaft 70. An end of the two annular retaining frames 42 corresponding to the arc-shaped groove C is provided with a slider 44 that fits into the arc-shaped groove C. In this way, the handle portion 305 can be connected to either one of the sliders 44, allowing the annular retaining frame 42 to rotate to be unlocked by sliding the slider 44 along the arc-shaped groove C through the handle portions 305. The cooperation between the arc-shaped grooves C and the sliders 44 ensures smoother rotation of the annular retaining frame 42.

Of course, in other embodiments, the barrel body 18 may be defined with two opening at both ends, which can be sealed with two cover bodies 19 respectively.

In some embodiments, a difference between a maximum distance and a minimum distance from the protrusions 73 to the axis of the rotating shaft 70 is set as L. The L represents the movement of the rolling members 41 when the protrusions 73 push the rolling members 41 towards the inner wall of the mounting hole K1. The L is ranged from 0.3mm to 1.5 mm, for example, the L may be 0.5mm, 0.7mm, 0.9mm, 1mm, 1.2mm, or 1.3mm.

In some embodiments, the L is within 0.5mm. This means that the distance between the contacting portions 11 and the axis of the rotating shaft 70 is within 0.5mm. This means that when the rolling members 41 of the locking assemblies 40 release the rotating shaft 70 for rotational adjustment, the gap between the rolling members 41 and the rotating shaft 70 is very small, ensuring that the external shaft does not shake and enabling stable rotational adjustment relative to the composite bearing.

In some embodiments, a radius of the rolling member 41 is ranged from 0.3mm to 20 mm. For example, the radius may be 1mm, 2mm, 3mm, 4mm, 5mm, 6mm, 8mm, 10mm, 13mm, 15mm, 18mm, 20mm.

In some embodiments, the ratio of the L to the radius of the rolling member 41 is ranged from 0.1 to 0.6, for example, 0.5, 0.4, 0.3.

In some embodiments, the ratio of L to the diameter of the mounting hole K1 (R) is ranged from 0.012 to 0.05, for example, 0.01, 0.015, 0.025, 0.03, 0.04, 0.045.

By adopting the dimensional data mentioned in the above embodiment, the rotational adjustment and locked state of the rotating assembly can be ensured to be stable and reliable.

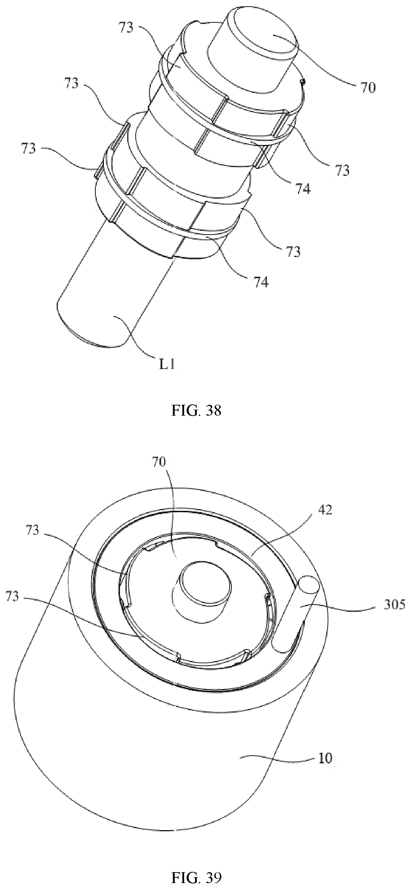

Referring to FIG. 39 to FIG. 43, in this embodiment, the rotating assembly includes the rotating shaft 70 and the composite bearing. The composite bearing includes the housing 10, the unlocking assembly 30, and two locking assemblies 40. The rotating shaft 70 is inserted into the two annular retaining frames 42, namely, the through holes K2 of the two annular retaining frames 42.

The outer peripheral wall of the rotating shaft 70 is provided with protrusions 73 corresponding to mounting slots 420. At least one rolling member 41 is located between the protrusions 73 and the inner wall of the mounting hole K1. Along the same circumference of the rotating shaft 70 (e.g., clockwise or counterclockwise), the protrusions 73, corresponding to one of the annular retaining frames 42, have heights gradually increases; and the protrusions 73, corresponding to the other annular retaining frame 42, have heights gradually decreases. That is, the direction of increase in the height of the protrusions 73 corresponding to the two annular retaining frames 42 is opposite.

In this embodiment, the working principle of the rotating assembly is as follows: first, when the rotating assembly needs to be locked, one of the annular retaining frames 42 (referred to as the first annular retaining frame 42) is rotated in a third direction (e.g., clockwise or counterclockwise) relative to the housing 10, and the other annular retaining frame 42 (referred to as the second annular retaining frame 42) is rotated in the opposite direction (referred to as the fourth direction). This causes the rolling members 41 of the two annular retaining frames 42 to move between the higher end of the protrusions 73 and the inner wall of the mounting hole K1. One side of the rolling members 41 is pressed against the protrusions 73, and the other side of the rolling members 41 is pressed against the inner wall of the mounting hole K1, increasing the friction between the rolling members 41 and the protrusions 73, as well as the friction between the rolling members 41 and the inner wall of the mounting hole K1. This locks the rotating shaft 70 to the housing 10 through the rolling members 41. Additionally, since the heights of the protrusions 73 corresponding to the two annular retaining frames 42 increase in opposite directions, when the rolling members 41 are pressed against between the protrusions 73 and the inner wall of the housing 10, whatever the rotating shaft 70 or the housing 10 is rotated clockwise or counterclockwise, the rolling members 41 of one of the annular retaining frames 42 will contact tighter with both the protrusions 73 and the housing 10, ensuring a stable and reliable locked state. Second, when the rotating assembly needs to be unlocked, the first annular retaining frame 42 rotates in the fourth direction relative to the housing 10, and the second annular retaining frame 42 rotates in the third direction. This causes the rolling members 41 of the two annular retaining frames 42 to move from between the higher end of the protrusions 73 and the inner wall of the mounting hole K1 to between the lower end of the protrusions 73 and the inner wall of the mounting hole K1. Both two ends of the rolling members 41 no longer press against the protrusions 73 and the inner wall of the mounting hole K1, which greatly reduces the friction between the rolling members 41 and the inner wall of the mounting hole K1, as well as the friction between the rolling members 41 and the protrusions 73. This allows the rolling members 41 to freely rotate relative to the housing 10 and the protrusions 73, unlocking the rotating shaft 70 from the housing 10.

In this embodiment, when the rotating assembly is applied to the photographic device, the housing 10 is connected to one photographic device, and the rotating shaft 70 is connected to another photographic device. In this way, when setting the rotating assembly to the unlocked state, an angle between the two photographic devices can be adjusted quickly, and when setting the rotating assembly to the locked state, the two photographic devices can be locked at the current angle.

In this embodiment, the rotating assembly is provided with two annular retaining frames 42 rotatably arranged in the mounting hole K1 of the housing 10. The rotating shaft 70 is inserted into the annular retaining frames 42, and the mounting slots 420 of the annular retaining frame 42 are equipped with rolling members 41. The protrusions 73 corresponding to the rolling members 41 are provided on the outer peripheral wall of the rotating shaft 70. The height of the protrusions 73 corresponding to the two annular retaining frames 42 are increased in opposite directions. By rotating the two annular retaining frames 42 in opposite directions (i.e., rotating in opposite directions), the rolling members 41 can be moved to press against the protrusions 73 and the inner wall of the mounting hole K1 to achieve the locked state of the rotating assembly. Similarly, by rotating the two annular retaining frames 42 in opposite directions, the rolling members 41 can be moved to disengage from the protrusions 73 and the inner wall of the mounting hole K1. Therefore, when the rotating assembly is applied as a connecting member between photographic devices, the rotating assembly allows for quick adjustment and locking of the angle between the photographic devices, making it more convenient for users to adjust the desired shooting angle.

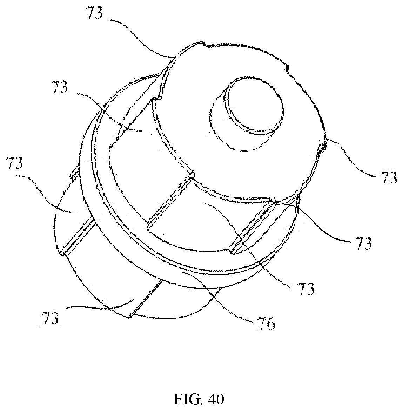

Referring to FIG. 40 to FIG. 43, in this embodiment, the outer peripheral wall of the rotating shaft 70 is provided with a limiting portion 76 located between the two annular retaining frames 42. By providing the limiting portion 76, when the rotating shaft 70 tends to move axially, the limiting portion 76 will be blocked by the annular retaining frames 42 in the direction of the movement trend, effectively preventing axial shaking of the rotating shaft 70 and ensuring the stability of the rotational motion relative to the housing 10, thereby ensuring the shooting stability of the photographic assembly or photographic device using the rotating assembly. In some embodiments, one side of the limiting portion 76 resists one of the two annular retaining frames 42, and the other side of the limiting portion 76 resists the other one of the annular retaining frames 42 in the axial direction.

In some embodiments, the limiting portion 76 is an annular flange coaxial with the rotating shaft 70, and an outer diameter of the annular flange is adapted to an inner diameter of the mounting hole K1. By further designing the limiting portion 76 as the annular flange and ensuring the contact between the outer peripheral wall of the limiting portion 76 and the inner wall of the mounting hole K1, on one hand, the center of gravity of the rotating shaft 70 can remain aligned with the axis, enhancing the stability of rotation. On the other hand, the contact between the outer peripheral wall of the annular flange and the inner wall of the mounting hole K1 provides limitation during the rotation of the rotating shaft 70, preventing eccentricity and ensuring stable rotation around the axis of the rotating shaft 70, further improving the rotational stability of the rotating assembly.

In other embodiments, the limiting portion 76 may also be composed of multiple protrusions evenly distributed along the circumference of the rotating shaft 70, and so on.

In some embodiments, the rolling member 41 includes at least one rolling body. In this embodiment, the rolling member 41 may include a single rolling body, taking a cylinder as an example. In other embodiments, the rolling member 41 may include multiple rolling bodies, which can be arranged side by side or coaxially. The rolling bodies can also be in the form of spheres, wheels, discs, etc..

In some embodiments, the unlocking assembly 30 includes two handle portions 305. Each of the two annular retaining frames 42 includes an end away from the other annular retaining frame 42 and arranged with one of the two handle portions 305. By providing the handle portions 305, it is more convenient for users to rotate the annular retaining frames 42. In other embodiments, the handle portion 305 can be of other structures.

In some embodiments, the composite bearing includes the transmission assembly 20 including a resetting spring (not shown in the drawings). An end of the resetting spring is connected to the handle portion 305, and the other end of the resetting spring is connected to the housing 10. The resetting spring drives the rolling members 41 to resist the rotating shaft 70 to fix the rotating shaft 70. In other words, the resetting spring exerts elastic force on the handle portion 305, keeping the handle portion 305 driving the annular retaining frame 42, allowing the rolling members 41 to move towards the protrusions 73 of the rotating shaft 70 and the inner wall of the mounting hole K1, thereby keeping the rolling members 41 in contact with the protrusions 73 and the inner wall of the mounting hole K1, maintaining the locked state of the rotating assembly to fix the rotating shaft 70.

In some embodiments, the transmission assembly 20 can also include a linkage component, and the handle portion 305 of the two annular retaining frames 42 can be connected through the linkage component. When one handle portion 305 drives corresponding annular retaining frame 42 to rotate in a third direction, the linkage component simultaneously drives the other handle portion 305 to rotate in the opposite direction to the third direction. This makes the unlocking and locking operations of the rotating assembly more convenient.

The present disclosure further provides a photographic assembly, and the photographic assembly includes the rotating assembly, a first photographic device, and a second photographic device. The specific structure of the rotating assembly refers to the above-mentioned embodiments. Since this photographic assembly adopts all the technical solutions of the rotating assembly mentioned above, photographic assembly has at least all the beneficial effects brought by the technical solutions of the above-mentioned embodiments, which are not repeated here.

The first photographic device is connected to the housing 10 of the rotating assembly, and the second photographic device is connected to the rotating shaft 70 of the rotating assembly. One of the first photographic device and the second photographic device can be connected to a photographic equipment (a camera or a camcorder).

In some embodiments, the photographic assembly may include a composite bearing, the first photographic device, and the second photographic device. The specific structure of the composite bearing refers to the above-mentioned embodiments. The first photographic device is connected to the housing 10 of the composite bearing, and the second photographic device includes a connecting shaft inserted through the through hole K2 of the annular retaining frames 42 of the composite bearing. The rolling members 41 of the composite bearing abut against the connecting shaft to fix the connecting shaft, and the unlocking assembly 30 of the composite bearing is configured to drive the rolling members 41 to disengage from the connecting shaft, allowing relative rotation between the connecting shaft and the first photographic device.

The above description is only a part or preferred embodiments of the present disclosure. Whether in words or in the drawings, it should not limit the scope of protection of the present disclosure. Any equivalent structural changes made by utilizing the contents of the present disclosure specification and drawings or directly/indirectly applying them in other relevant technical fields, under the overall concept of the present disclosure, are included in the scope of protection of the present disclosure which is defined by the appended claims.

## Claims

1. A composite bearing (100), applied to a photographic device, comprising:
a housing (10) defined with a mounting hole (K1);
two locking assemblies (40), rotatably arranged in the mounting hole (K1) in sequence along an axial direction of the mounting hole (K1), both of the two locking assemblies (40) being defined with a through hole (K2) along an axial direction of the housing (10), and the through hole (K2) being configured to mount an external shaft;
a transmission assembly (20) connected to the two locking assemblies (40) respectively to allow the two locking assemblies (40) clamping the external shaft in the through hole (K2) of the locking assemblies (40); and
an unlocking assembly (30) connected to the two locking assemblies (40) respectively, and configured to drive the two locking assemblies (40) to rotate to release the external shaft;
**characterized in that**, a side wall of each of the locking assemblies (40) is provided with a plurality of rolling members (41) arranged at intervals and along a periphery of the locking assembly (40), and the rolling members (41) being located between an inner wall of the mounting hole and the external shaft; and
the rolling members (41) are capable of moving in a radial direction of the housing (10); wherein the transmission assembly (20) is configured to drive the plurality of rolling members (41) to move close to an axis of the through hole (K2), to allow the plurality of rolling members (41) to clamp and lock the external shaft; and the unlocking assembly (30) is configured to drive the plurality of rolling members (41) to move away from the axis of the through hole (K2), to allow the plurality of rolling members (41) to release the external shaft.

2. The composite bearing of claim 1, wherein the unlocking assembly (30) comprises an operating member (31) configured for handheld operation and a pulling rope (32), the operating member (31) is arranged on the housing (10), the pulling rope (32) has two ends with one end connecting to one of the two locking assemblies (40) and the other end connecting to the other one of the locking assemblies (40), and the operating member (31) is connected to the pulling rope (32) to pull the two locking assemblies (40) to rotate in opposite directions through the polling rope (32), causing the rolling members (41) of the locking assemblies (40) to release the external shaft.

3. The composite bearing (100) of claim 2, wherein the operating member (31) comprises a trigger (35) articulated with the housing (10), the pulling rope (32) hangs on an end of the trigger (35), the other end of the trigger (35) defines an operating portion (311), and the two locking assemblies (40) are driven to rotate in opposite directions by way of pulling the pulling rope (32) outwardly by the trigger (35).

4. The composite bearing (100) of claim 2, wherein the operating member (31) comprises a knob rotatably arranged on the housing (10), an end of the knob along the axial direction is connected to the pulling rope (32), and the two locking assemblies (40) are driven to rotate in opposite directions by the pulling rope (32) by way of twisting the knob.

5. The composite bearing (100) of claim 4, wherein an outer side of the housing (10) is provided with two first mounting arms (12) arranged at intervals and facing to each other, the knob is rotatably arranged at a top of the two first mounting arms (12), an end of the knob close to the mounting hole (K1) is positioned over a middle portion of the pulling rope (32), and the middle portion of the pulling rope (32) is threaded through or hanged on an end of the knob close to the mounting hole (K1).

6. The composite bearing (100) of claim 2, wherein the operating member (31) comprises a button, and an end of the button acts on the pulling rope (32), by way of pressing down the pulling rope (32), to drive the two locking assemblies (40) to rotate in opposite directions.

7. The composite bearing (100) of claim 6, wherein the outer side of the housing (10) is provided with two second mounting arms (13) arranged at intervals and facing to each other, the button is slidably connected to the two second mounting arms (13) along a direction toward the mounting hole (K1), both sides of the button are provided with a limiting rod (121) respectively, the two limiting rods (121) are located between the two second mounting arms (13), the middle portion of the pulling rope (32) hangs on the two limiting rods (121), and an end of the button close to the mounting hole (K1) is pressed against the middle portion of the pulling rope (32).

8. The composite bearing (100) of claim 1, wherein the unlocking assembly (30) comprises a rotating member (33) rotatably arranged on the housing (10), an axis of the rotating member (33) is perpendicular to an axis of the through hole (K2), an end of the rotating member (33) is provided with a rotating bevel gear (331), two adjacent ends of the two locking assemblies (40) are engaged with the rotating bevel gear (331), and the rotating member (33) rotates the rotating bevel gear (331) to drive the two locking assemblies (40) to rotate in opposite directions;
or; the unlocking assembly (30) comprises two levers (34), one of the two levers (34) is connected to one of the two locking assemblies (40), and the other one of the levers (34) is connected to the other one of the locking assemblies (40).

9. The composite bearing (100) of claim 1, wherein the locking assembly (40) further comprises an annular retaining frame (42) located inside the housing (10), the annular retaining frame (42) is defined with a plurality of mounting slots (420) arranged at intervals and along a periphery wall of the annular retaining frame (42), the rolling members (41) are correspondingly arranged in the mounting slots (420) and are capable of moving in a radial direction of the annular retaining frame (42); an inner peripheral wall of the housing (10) is provided with a plurality of contacting portions (11) distributed along the inner peripheral wall of the housing (10), each of the contacting portions (11) corresponds and contacts to one of the rolling members (41); the contacting portions (11), corresponding to one of the annular retaining frames (42), have heights gradually increases in a first circumferential direction of the mounting hole (K1); and the contacting portions (11), corresponding to the other annular retaining frame (42), have heights gradually decreases in the first circumferential direction of the mounting hole (K1).

10. The composite bearing (100) of claim 9, wherein a difference between a maximum distance and a minimum distance from the contacting portions (11) to an axis of the mounting hole (K1) is set as L, a diameter of the mounting hole (K1) is set as R;
wherein the L is 0. 3mm to 1. 5mm, or the L is within 0. 5mm; and/or,
a ratio of the L to a radius of the rolling member (41) is 0. 1 to 0. 6; and/or,
a ratio of the L to the R is 0.012 to 0. 05; and/or,
an outer diameter of the housing (10) is within 25mm; and/or,
a radius of each rolling member (41) is 0. 3mm to 20mm.

11. The composite bearing (100) of claim 9, wherein an end of each of the two locking assemblies (40) adjacent to the other locking assembly (40) is provided with an annular pawl (43); each annular retaining frame (42) comprises an end adjacent to the other annular retaining frame (42), with each of the two adjacent ends connected with one of the annular pawl (43); a peripheral side of the housing (10) is defined with a pawl mounting port (K3) extending along a circumferential direction of the mounting hole (K1), the pawl mounting port (K3) is arranged facing to a side wall of the two annular pawls (43), and the unlocking assembly (30) is connected to the two annular pawls (43) from the pawl mounting port (K3).

12. The composite bearing (100) of claim 11, wherein the transmission assembly (20) comprises a tension spring (21) arranged around an outer peripheral wall of the housing (10), the tension spring (21) is in a stretched state and connects to the locking assemblies (40) to allow the two locking assemblies (40) clamping the external shaft in the through hole (K2); and the tension spring (21) extends in a circuitous manner along a circumference of the housing (10).

13. The composite bearing (100) of claim 12, wherein a middle section of the tension spring (21) comprises a plurality of S-shaped portions or Z-shaped portions; openings of the S-shaped portions are toward an end of the housing (10), or openings of the Z-shaped portions are toward the end of the housing (10);
and/or, both ends of the tension spring (21) are provided with a hook (211), and each of the two hooks (211) is connected to one of the two locking assemblies (40);
and/or, the outer peripheral wall of the housing (10) is defined with an annular groove (14), and the tension spring (21) is arranged in the annular groove (14).

14. The composite bearing (100) of claim 12, wherein the annular pawl (43) is provided with a connecting post (431) located outside of the pawl mounting port (K3), the tension spring (21) is wrapped around a side of the housing (10) away from the pawl mounting port (K3), and the tension spring (21) has two ends with each end connecting to the connecting post (431) of one of the two annular pawls (43).

15. The composite bearing (100) of claim 14, wherein an inner side of each of the two annular pawls (43) is projected with several first protrusions (432) along a radial direction of the annular pawl (43), the several first protrusions (432) are arranged at intervals in a circumferential direction of the annular pawls (43), two adjacent ends of the two annular retaining frames (42) are provided with several second protrusions (42) along an axial direction of the annular retaining frames (42), the several second protrusions (421) are arranged at intervals in a circumferential direction of the annular retaining frames (421); the several second protrusions of each annular retaining frame (42) are staggered with the several first protrusions (432) of the corresponding annular pawl (43), and each second protrusion (421) is clasped between two adjacent first protrusions (432);
and/or, an inner wall of the housing (10) is defined with an annular pawl positioning groove (15), the pawl mounting port (K3) is defined on a bottom surface of the pawl positioning groove (15), and the two annular pawls (43) are fitted and clasped in the pawl positioning groove (15).

16. The composite bearing (100) of claim 1, wherein the unlocking assembly (30) comprises a first pulling member (37a), a second pulling member (37b), a connecting member (38), and an unlocking member (39); an end of the first pulling member (37a) is rotatably connected to one of the locking assemblies (40), the other end of the first pulling member (37a) is rotatably connected to an end of the connecting member (38); an end of the second pulling member (37b) is rotatably connected to the other one of the locking assemblies (40), the other end of the second pulling member (37b) is rotatably connected to the other end of the connecting member (38); the unlocking member (39) drives the connecting member (38) to move upward to drive the first pulling member (37a) and the second pulling member (37b) to drive the two locking assemblies (40) to rotate to release the external shaft.

17. The composite bearing (100) of claim 16, wherein the unlocking assembly (30) further comprises a first shaft rod (301), the first shaft rod (301) has two ends with one provided with a first connecting portion (52) and the other provided with a second connecting portion (391), the first connecting portion (52) and the second connecting portion (391) are protruded on a front side and a rear side of the connecting member (38) respectively, the first connecting portion (52) is connected to the first pulling member (37a), and the second connecting portion (391) is connected to the second pulling member (37b).

18. The composite bearing (100) of claim 16 or claim 17, wherein the composite bearing further comprises a mounting seat (50) arranged on the housing (10), the mounting seat (50) is defined with a mounting port (51), an end of the connecting member (38) passing through the mounting port (51) is provided with a second shaft rod (302), the unlocking member (39) is rotatably connected to the mounting seat (50) through a third shaft rod (303), the third shaft rod (303) is arranged parallel to the second shaft rod (302), the unlocking member (39) is defined with a slot (392) defined with an opening towards the second shaft rod (302), an outer peripheral wall of the second shaft (302) rod is engaged in the slot (392), and the unlocking member (39) drives the second shaft rod (302) to move upward to drive the connecting member (38) to move upward when the unlocking member (39) rotates in a first direction around the third shaft rod (303).

19. The composite bearing (100) of claim 18, wherein an upper surface of the mounting seat (50) is provided with the first connecting portion (52), the unlocking member (39) comprises the second connecting portion (391), the second connecting portion (391) is defined with a connecting groove (390), the first connecting portion (52) passes through a bottom opening of the connecting groove (390) and is rotatably accommodated in the connecting groove (390), and the third shaft rod (303) comprises two ends with each end protruded on one side of the first connecting portion (52) and passing through one side wall of the connecting groove (390).

20. The composite bearing (100) of claim 19, wherein an elastic member (304) is provided between an inner wall of the connecting groove (390) and an upper surface of the first connecting portion (52), and the elastic member (304) is located between the second shaft rod (302) and the third shaft rod (303);
or, an upper portion of the second connecting portion (391) is further connected with a manual portion (393), and an outer surface of the manual portion (393) is curved.

21. A rotating assembly, comprising:
a composite bearing (100) as claimed in any one of claims 1-20; and
a rotating shaft (70), inserted into the two locking assemblies (40), both of the two the locking assemblies (40) further comprising an annular retaining frame (42) located inside the housing (10), the annular retaining frame (42) being defined with a plurality of mounting slots (420) arranged at intervals and along a periphery wall of the annular retaining frame (42), the rolling members (41) of the locking assemblies (40) being located inside the mounting slots (420), an outer peripheral wall of the rotating shaft (70) being provided with two protrusions (73) corresponding to the two annular retaining frames (42); the protrusions (73), corresponding to one of the annular retaining frames (42), having heights gradually increases in a second circumferential direction of the rotating shaft (70); the protrusions (73), corresponding to the other annular retaining frame (42), having heights gradually decreases in the second circumferential direction of the rotating shaft (70); and the rolling members (41) being located between the protrusions (73) and the inner wall of the mounting hole (K1).

22. The rotating assembly of claim 21, wherein the outer peripheral wall of the rotating shaft (70) corresponding to each annular retaining frame (42) is further provided with an annular protrusion (74) respectively, the annular protrusion (74) is coaxial with the rotating shaft (70), the height of the annular protrusion (74) is greater than a maximum height of the protrusions (73), the rolling member (41) comprises at least two rolling bodies, each one of the at least two rolling bodies is clamped in two sides of the corresponding annular protrusion (74) along an axial direction of the annular protrusion (74); or,
at least some of the mounting slots (420) are provided with at least one partition, the at least one partition divides the mounting slots (420) into at least two segments arranged along an axial direction of the annular retaining frame (42).

23. The rotating assembly of claim 21, wherein the rolling member (41) comprises at least one rolling body (411), the rolling body (411) is a ball, or the rolling body (411) is a cylinder with an axis parallel to an axis of the rotating shaft (70); a wall of the mounting hole (K1) and/or the protrusions (73) are defined with raceways matching the ball.

24. The rotating assembly of claim 21, wherein the unlocking assembly (30) of the composite bearing (100) comprises two handle portions (305); each of the two annular retaining frames (42) comprises an end away from the other annular retaining frame (42) and arranged with one of the two handle portions (305).

25. The rotating assembly of claim 21, wherein the two annular retaining frames (42) are driven together by the transmission assembly (20), the transmission assembly (20) is configured to drive one of the annular retaining frames (42) to rotate in the opposite direction when the other annular retaining frame (42) rotates; the transmission assembly (20) comprises a transmission bevel gear (23), the transmission bevel gear (23) is located between the two annular retaining frames (42), ends of the two annular retaining frames (42) closed to each other are both defined with a bevel gear surface (W), the transmission bevel gear (23) is rotatably installed on the outer peripheral wall of the rotating shaft (70), and the transmission bevel gear (23) meshes with the bevel gear surfaces (W) of the two annular retaining frames (42).

26. The rotating assembly of claim 21, wherein the transmission assembly (20) further comprises a spring member (22), the spring member (22) is located on one side of the rotating shaft (70), an end of the spring member (22) is connected to the annular retaining frame (42), the other end of the spring member (22) is connected to the housing (10), and the spring member (22) drives the rolling members (41) to resist both the protrusions (73) and the housing (10), allowing the rotating shaft (70) and the housing (10) to be locked.

27. The rotating assembly of claim 21, wherein the outer peripheral wall of the rotating shaft (70) is provided with a limiting portion (53) located between the two annular retaining frames (42); the limiting portion (53) is an annular flange coaxial with the rotating shaft (70), and an outer diameter of the annular flange is matched to an inner diameter of the mounting hole (K1).

28. A photographic assembly, comprising:
a rotating assembly as claimed in any one of claims 21-27;
a first photographic device, connected to the housing (10) of the rotating assembly; and
a second photographic device, connected to the rotating shaft (70) of the rotating assembly.

## Patentansprüche

1. Verbundlager (100), in einer fotografischen Vorrichtung verwendet wird, umfassend:
ein Gehäuse (10), das mit einer Montagebohrung (K1) versehen ist;
zwei Verriegelungsanordnungen (40), die drehbar in der Montagebohrung (K1) entlang einer axialen Richtung der Montagebohrung (K1) hintereinander angeordnet sind, wobei beide der zwei Verriegelungsanordnungen (40) mit einer Durchgangsbohrung (K2) entlang einer axialen Richtung des Gehäuses (10) ausgebildet sind und die Durchgangsbohrung (K2) dazu konfiguriert ist, eine externe Welle zu montieren;
eine Getriebeanordnung (20), die mit den beiden Verriegelungsanordnungen (40) verbunden ist, um jeweils zu ermöglichen, dass die beiden Verriegelungsanordnungen (40) die externe Welle in der Durchgangsbohrung (K2) der Verriegelungsanordnungen (40) klemmt; und
eine Entriegelungsanordnung (30), die mit den beiden Verriegelungsanordnungen (40) verbunden und dazu konfiguriert ist, die beiden Verriegelungsanordnungen (40) in Drehung zu versetzen, um die externe Welle freizugeben;
**dadurch gekennzeichnet, dass** eine Seitenwand jeder Verriegelungsanordnung (40) mit mehreren im Abstand und entlang einem Umfang der Verriegelungsanordnung (40) angeordneten Wälzelementen (41) versehen ist und sich die Wälzelemente (41) zwischen einer Innenwand der Montagebohrung (K1) und der externen Welle befinden;
wobei die Wälzelemente (41) in der Lage sind, sich in einer radialen Richtung des Gehäuses (10) zu bewegen; wobei die Getriebeanordnung (20) dazu konfiguriert ist, die mehreren Wälzelemente (41) dazu anzutreiben, sich einer Achse der Durchgangsbohrung (K2) zu nähern, um zu ermöglichen, dass die mehreren Wälzelemente (41) die externe Welle klemmen und arretieren; und wobei die Entriegelungsanordnung (30) dazu konfiguriert ist, die mehreren Wälzelemente (41) dazu anzutreiben, sich von der Achse der Durchgangsbohrung (K2) wegzubewegen, um zu ermöglichen, dass die mehreren Wälzelemente (41) die externe Welle freigeben.

2. Verbundlager nach Anspruch 1, wobei die Entriegelungsanordnung (30) ein für Handbedienung konfiguriertes Betätigungselement (31) und ein Zugseil (32) umfasst, wobei das Betätigungselement (31) am Gehäuse (10) angeordnet ist, wobei das Zugseil (32) zwei Enden aufweist, wobei ein Ende mit einer der beiden Verriegelungsanordnungen (40) verbunden ist und das andere Ende mit der anderen Verriegelungsanordnung (40) verbunden ist, und wobei das Betätigungselement (31) mit dem Zugseil (32) verbunden ist, um die beiden Verriegelungsanordnungen (40) über das Zugseil (32) jeweils in entgegengesetzte Richtungen in Drehung zu versetzen, wodurch die Wälzelemente (41) der Verriegelungsanordnungen (40) die externe Welle freigeben.

3. Verbundlager (100) nach Anspruch 2, wobei das Betätigungselement (31) einen mit dem Gehäuse (10) artikulierten Auslöser (35) aufweist, das Zugseil (32) an einem Ende des Auslösers (35) aufgehängt ist, das andere Ende des Auslösers (35) einen Betätigungsabschnitt (311) definiert und die beiden Verriegelungsanordnungen (40) in entgegengesetzte Richtung in Drehung versetzt werden, indem das Zugseil (32) durch den Auslöser (35) nach außen gezogen wird.

4. Verbundlager (100) nach Anspruch 2, wobei das Betätigungselement (31) einen drehbar am Gehäuse (10) angeordneten Knopf umfasst, ein Ende des Knopfes in axialer Richtung mit dem Zugseil (32) verbunden ist und die zwei Verriegelungsanordnungen (40) über das Zugseil durch Drehen des Knopfes(32) in entgegengesetzte Richtungen in Drehung versetzt werden.

5. Verbundlager (100) nach Anspruch 4, wobei eine Außenseite des Gehäuses (10) mit zwei ersten Montagearmen (12) versehen ist, die im Abstand zueinander angeordnet und einander zugewandt sind, der Knopf drehbar an einer Oberseite der beiden ersten Montagearme (12) angeordnet ist, ein Ende des Knopfes nahe der Montagebohrung (K1) über einem Mittelabschnitt des Zugseils (32) positioniert ist und der Mittelabschnitt des Zugseils (32) durch ein Ende des Knopfes nahe der Montagebohrung (K1) gefädelt oder daran aufgehängt ist.

6. Verbundlager (100) nach Anspruch 2, wobei das Betätigungselement (31) eine Taste aufweist und ein Ende der Taste auf das Zugseil (32) einwirkt, um durch Herunterdrücken des Zugseils (32) die beiden Verriegelungsanordnungen (40) in entgegengesetzte Richtung in Drehung zu versetzen.

7. Verbundlager (100) nach Anspruch 6, wobei eine Außenseite des Gehäuses (10) mit zwei zweiten Montagearmen (13) versehen ist, die im Abstand zueinander angeordnet und einander zugewandt sind, die Taste gleitbar entlang einer Richtung zur Montagebohrung (K1) hin mit den beiden zweiten Montagearmen (13) verbunden ist, beide Seiten der Taste jeweils mit einem Begrenzungsstab (121) versehen sind, die beiden Begrenzungsstäbe (121) zwischen den beiden zweiten Montagearmen (13) angeordnet sind, der Mittelabschnitt des Zugseils (32) an den beiden Begrenzungsstäben (121) aufgehängt ist und ein Ende der Taste nahe der Montagebohrung (K1) gegen den Mittelabschnitt des Zugseils (32) gepresst ist.

8. Verbundlager (100) nach Anspruch 1, wobei die Entriegelungsanordnung (30) ein drehbar an dem Gehäuse (10) angeordnetes Drehelement (33) aufweist, wobei eine Achse des Drehelements (33) senkrecht zu einer Achse der Durchgangsbohrung (K2) verläuft, ein Ende des Drehelements (33) mit einem Drehkegelrad (331) versehen ist, zwei benachbarte Enden der beiden Verriegelungsanordnungen (40) mit dem Drehkegelrad (331) in Eingriff stehen und das Drehelement (33) das Drehkegelrad (331) dreht, um die beiden Verriegelungsanordnungen (40) in entgegengesetzte Richtung in Drehung zu versetzen;
oder wobei die Entriegelungsanordnung (30) zwei Hebel (34) aufweist, wobei einer der beiden Hebel (34) mit einer der beiden Verriegelungsanordnungen (40) verbunden ist und der andere der Hebel (34) mit der anderen der Verriegelungsanordnungen (40) verbunden ist.

9. Verbundlager (100) nach Anspruch 1, wobei die Verriegelungsanordnung (40) ferner einen ringförmigen Halterahmen (42) umfasst, der sich im Inneren des Gehäuses (10) befindet, wobei der ringförmige Halterahmen (42) mit mehreren im Abstand angeordneten und entlang einer Umfangswand des ringförmigen Halterahmens (42) verlaufenden Montagenuten (420) versehen ist, wobei die Wälzelemente (41) entsprechend in den Montagenuten (420) angeordnet sind und in der Lage sind, sich in einer Radialrichtung des ringförmigen Halterahmens (42) zu bewegen; eine innere Umfangswand des Gehäuses (10) mit mehreren entlang der inneren Umfangswand des Gehäuses (10) verteilten Kontaktabschnitten (11) ausgestattet ist, wobei jeder der Kontaktabschnitte (11) einem der Wälzelemente (41) entspricht und diesen kontaktiert; die Kontaktabschnitte (11), die einem der ringförmigen Halterahmen (42) entsprechen, Höhen aufweisen, die in einer ersten Umfangsrichtung der Montagebohrung (K1) allmählich zunehmen; und die Kontaktabschnitte (11), die dem anderen ringförmigen Halterahmen (42) entsprechen, Höhen aufweisen, die in der ersten Umfangsrichtung der Montagebohrung (K1) allmählich abnehmen.

10. Verbundlager (100) nach Anspruch 9, wobei eine Differenz zwischen einem maximalen Abstand und einem minimalen Abstand von den Kontaktabschnitten (11) zu einer Achse der Montagebohrung (K1) als L festgelegt ist, ein Durchmesser der Montagebohrung (K1) als R festgelegt ist,
wobei das L 0,3 mm bis 1,5 mm beträgt oder das L maximal 0,5 mm beträgt; und/oder,
ein Verhältnis von L zu einem Radius des Wälzelements (41) 0,1 bis 0,6 beträgt; und/oder,
ein Verhältnis von L zu R 0,012 bis 0,05 beträgt; und/oder,
ein Außendurchmesser des Gehäuses (10) maximal 25 mm beträgt; und/oder,
ein Radius jedes Wälzelements (41) 0,3 mm bis 20 mm beträgt.

11. Verbundlager (100) nach Anspruch 9, wobei ein Ende jeder der beiden Verriegelungsanordnungen (40), das zu der anderen Verriegelungsanordnung (40) benachbart ist, mit einem ringförmigen Rasten (43) versehen ist; jeder ringförmige Halterahmen (42) ein zu dem anderen ringförmigen Halterahmen (42) benachbartes Ende umfasst, wobei jedes der beiden benachbarten Enden mit einem der ringförmigen Rasten (43) verbunden ist; eine Umfangsseite des Gehäuses (10) ist mit einer Rastenmontageöffnung (K3) versehen, die sich entlang einer Umfangsrichtung der Montagebohrung (K1) erstreckt, die Rastenmontageöffnung (K3) ist einer Seitenwand der beiden ringförmigen Rasten (43) zugewandt angeordnet, und die Entriegelungsanordnung (30) ist von der Rastenmontageöffnung (K3) aus mit den beiden ringförmigen Rasten (43) verbunden.

12. Verbundlager (100) nach Anspruch 11, wobei die Getriebeanordnung (20) eine Zugfeder (21) umfasst, die um eine äußere Umfangswand des Gehäuses (10) angeordnet ist, wobei die Zugfeder (21) in einem gespannten Zustand ist und mit den Verriegelungsanordnungen (40) verbunden ist, um zu ermöglichen, dass die beiden Verriegelungsanordnungen (40) die externe Welle in der Durchgangsbohrung (K2) klemmen; und wobei die Zugfeder (21) sich in einer geschlängelten Weise entlang eines Umfangs des Gehäuses (10) erstreckt.

13. Verbundlager (100) nach Anspruch 12, wobei ein Mittelsegment der Zugfeder (21) eine Vielzahl von S-förmigen Abschnitten oder Z-förmigen Abschnitten aufweist; Öffnungen der S-förmigen Abschnitte sind zu einem Ende des Gehäuses (10) hin gerichtet, oder Öffnungen der Z-förmigen Abschnitte sind zu dem Ende des Gehäuses (10) hin gerichtet;
und/oder beide Enden der Zugfeder (21) mit einem Haken (211) versehen sind, und jeder der beiden Haken (211) mit einer der beiden Verriegelungsanordnungen (40) verbunden ist;
und/oder die äußere Umfangswand des Gehäuses (10) mit einer Ringnut (14) versehen ist, und die Zugfeder (21) in der Ringnut (14) angeordnet ist.

14. Verbundlager (100) nach Anspruch 12, wobei die ringförmige Raste (43) mit einem Verbindungsstift (431) versehen ist, der außerhalb der Rastenmontageöffnung (K3) angeordnet ist, die Zugfeder (21) um eine von der Rastenmontageöffnung (K3) entfernte Seite des Gehäuses (10) gewickelt ist und die Zugfeder (21) zwei Enden aufweist, wobei jedes Ende mit dem Verbindungsstift (431) einer der beiden ringförmigen Rasten (43) verbunden ist.

15. Verbundlager (100) nach Anspruch 14, wobei eine Innenseite jeder der beiden ringförmigen Rasten (43) mit mehreren ersten Vorsprüngen (432) entlang einer Radialrichtung der ringförmigen Raste (43) versehen ist, die mehreren ersten Vorsprüngen (432) in Umfangsrichtung der ringförmigen Rasten (43) beabstandet angeordnet sind, zwei benachbarte Enden der beiden ringförmigen Halterahmen (42) mit mehreren zweiten Vorsprüngen (421) entlang einer Axialrichtung der ringförmigen Halterahmen (42) ausgestattet sind, die mehreren zweiten Vorsprüngen (421) in Umfangsrichtung der ringförmigen Halterahmen (421) beabstandet angeordnet sind; die mehreren zweiten Vorsprünge jedes ringförmigen Halterahmens (42) mit den mehreren ersten Vorsprüngen (432) der entsprechenden ringförmigen Raste (43) versetzt sind und jeder zweite Vorsprung (421) zwischen zwei benachbarten ersten Vorsprüngen (432) eingeklemmt ist.
und/oder eine Innenwand des Gehäuses (10) mit einer ringförmigen Rastenpositioniernut (15) versehen ist, die Rastenmontageöffnung (K3) an einer Bodenfläche der Rastenpositioniernut (15) ausgebildet ist, und die beiden ringförmigen Rasten (43) in der Rastenpositioniernut (15) eingepasst und eingeklemmt sind.

16. Verbundlager (100) nach Anspruch 1, worin die Entriegelungsanordnung (30) ein erstes Zugelement (37a), ein zweites Zugelement (37b), ein Verbindungselement (38) und ein Entriegelungselement (39) umfasst; ein Ende des ersten Zugelements (37a) drehbar mit einer der Verriegelungsanordnungen (40) verbunden ist, das andere Ende des ersten Zugelements (37a) drehbar mit einem Ende des Verbindungselements (38) verbunden ist; ein Ende des zweiten Zugelements (37b) drehbar mit der anderen der Verriegelungsanordnungen (40) verbunden ist, das andere Ende des zweiten Zugelements (37b) drehbar mit dem anderen Ende des Verbindungselements (38) verbunden ist; das Entriegelungselement (39) das Verbindungselement (38) antreibt, sich nach oben zu bewegen, um das erste Zugelement (37a) und das zweite Zugelement (37b) anzutreiben, die beiden Verriegelungsanordnungen (40) in Drehung zu versetzen, um die externe Welle freizugeben.

17. Verbundlager (100) nach Anspruch 16, wobei die Entriegelungsanordnung (30) ferner eine erste Wellenstange (301) aufweist, wobei die erste Wellenstange (301) zwei Enden aufweist, wobei an einem Ende ein erster Verbindungsabschnitt (52) und am anderen Ende ein zweiter Verbindungsabschnitt (391) ausgebildet ist, wobei der erste Verbindungsabschnitt (52) und der zweite Verbindungsabschnitt (391) jeweils an einer Vorderseite und einer Rückseite des Verbindungselements (38) vorstehen, wobei der erste Verbindungsabschnitt (52) mit dem ersten Zugelement (37a) verbunden ist und der zweite Verbindungsabschnitt (391) mit dem zweiten Zugelement (37b) verbunden ist.

18. Verbundlager (100) nach Anspruch 16 oder Anspruch 17, wobei das Verbundlager ferner einen Montagesitz (50) umfasst, der am Gehäuse (10) angeordnet ist, wobei der Montagesitz (50) mit einer Montageöffnung (51) versehen ist, ein Ende des Verbindungselements (38), das durch die Montageöffnung (51) hindurchgeführt wird, mit einer zweiten Wellenstange (302) versehen ist, das Entriegelungselement (39) drehbar über eine dritte Wellenstange (303) mit dem Montagesitz (50) verbunden ist, die dritte Wellenstange (303) parallel zur zweiten Wellenstange (302) angeordnet ist, das Entriegelungselement (39) mit einem Schlitz (392) versehen ist, der mit einer Öffnung zur zweiten Wellenstange (302) hin versehen ist, eine äußere Umfangswand der zweiten Wellenstange (302) in den Schlitz (392) eingreift, und das Entriegelungselement (39) die zweite Wellenstange (302) antreibt, sich nach oben zu bewegen, um das Verbindungselement (38) nach oben zu bewegen, wenn sich das Entriegelungselement (39) in eine erste Richtung um die dritte Wellenstange (303) dreht.

19. Verbundlager (100) nach Anspruch 18, wobei eine obere Fläche des Montagesitzes (50) mit dem ersten Verbindungsabschnitt (52) versehen ist, das Entriegelungselement (39) den zweiten Verbindungsabschnitt (391) umfasst, der zweite Verbindungsabschnitt (391) mit einer Verbindungsnut (390) versehen ist, der erste Verbindungsabschnitt (52) durch eine Bodenöffnung der Verbindungsnut (390) hindurchgeführt und drehbar in der Verbindungsnut (390) aufgenommen ist, und die dritte Wellenstange (303) zwei Enden umfasst, wobei jedes Ende an einer Seite des ersten Verbindungsabschnitts (52) vorsteht und durch eine Seitenwand der Verbindungsnut (390) hindurchgeführt.

20. Verbundlager (100) nach Anspruch 19, wobei zwischen einer Innenwand der Verbindungsnut (390) und einer oberen Fläche des ersten Verbindungsabschnitts (52) ein elastisches Element (304) angeordnet ist, und das elastische Element (304) zwischen der zweiten Wellenstange (302) und der dritten Wellenstange (303) angeordnet ist;
oder ein oberer Abschnitt des zweiten Verbindungsabschnitts (391) ferner mit einem Handgriffabschnitt (393) verbunden ist, und eine Außenfläche des Handgriffabschnitts (393) ist gekrümmt.

21. Drehanordnung, umfassend:
ein Verbundlager (100) nach einem der Ansprüche 1 bis 20; und
eine Drehwelle (70), die in die beiden Verriegelungsanordnungen (40) eingesetzt ist, wobei beide der beiden Verriegelungsanordnungen (40) ferner einen ringförmigen Halterahmen (42) umfassen, der sich im Inneren des Gehäuses (10) befindet, wobei der ringförmige Halterahmen (42) mit einer Vielzahl von Montagenuten (420) versehen ist, die in Abständen entlang einer Umfangswand des ringförmigen Halterahmens (42) angeordnet sind, wobei die Wälzelemente (41) der Verriegelungsanordnungen (40) in den Montagenuten (420) angeordnet sind, wobei eine äußere Umfangswand der Rotationswelle (70) mit zwei Vorsprüngen (73) ausgestattet ist, die den beiden ringförmigen Halterahmen (42) entsprechen; die Vorsprünge (73), die einem der ringförmigen Halterahmen (42) entsprechen, Höhen aufweisen, die in einer zweiten Umfangsrichtung der Drehwelle (70) allmählich zunehmen; die Vorsprünge (73), die dem anderen ringförmigen Halterahmen (42) entsprechen, Höhen aufweisen, die in der zweiten Umfangsrichtung der Drehwelle (70) allmählich abnehmen; und die Wälzelemente (41) zwischen den Vorsprüngen (73) und der Innenwand der Montagebohrung (K1) angeordnet sind.

22. Drehanordnung nach Anspruch 21, wobei die äußere Umfangswand der Drehwelle (70) entsprechend jedem ringförmigen Halterahmen (42) weiterhin jeweils mit einem ringförmigen Vorsprung (74) versehen ist, der ringförmige Vorsprung (74) koaxial mit der Drehwelle (70) ist, die Höhe des ringförmigen Vorsprungs (74) größer ist als eine maximale Höhe der Vorsprünge (73), das Wälzelemente (41) mindestens zwei Wälzkörper umfasst, wobei jeder der mindestens zwei Wälzkörper an zwei Seiten des entsprechenden ringförmigen Vorsprungs (74) entlang einer axialen Richtung des ringförmigen Vorsprungs (74) eingespannt ist; oder,
zumindest einige der Montagenuten (420) mindestens eine Trennwand aufweisen, wobei die mindestens eine Trennwand die Montagenuten (420) in mindestens zwei Segmente unterteilt, die entlang einer axialen Richtung des ringförmigen Halterahmens (42) angeordnet sind.

23. Drehanordnung nach Anspruch 21, wobei die Wälzelemente (41) mindestens einen Wälzkörper (411) umfasst, wobei der Wälzkörper (411) eine Kugel ist oder der Wälzkörper (411) ein Zylinder mit einer Achse parallel zu einer Achse der Drehwelle (70) ist; eine Wand der Montagebohrung (K1) und/oder die Vorsprünge (73) mit Laufbahnen versehen sind, die zur Kugel passen.

24. Drehanordnung nach Anspruch 21, wobei die Entriegelungsanordnung (30) des Verbundlagers (100) zwei Griffabschnitte (305) umfasst; jeder der beiden ringförmigen Halterahmen (42) ein Ende umfasst, das von dem anderen ringförmigen Halterahmen (42) abgewandt ist und mit einem der beiden Griffabschnitte (305) angeordnet ist.

25. Drehanordnung nach Anspruch 21, wobei die beiden ringförmigen Halterahmen (42) gemeinsam von der Getriebeanordnung (20) angetrieben werden, wobei die Getriebeanordnung (20) dazu konfiguriert ist, einen der ringförmigen Halterahmen (42) in die entgegengesetzte Richtung in Drehung zu versetzen, wenn sich der andere ringförmige Halterahmen (42) dreht; wobei die Getriebeanordnung (20) ein Antriebskegelrad (23) umfasst, das Antriebskegelrad (23) zwischen den beiden ringförmigen Halterahmen (42) liegt, die einander zugewandten Enden der beiden ringförmigen Halterahmen (42) jeweils mit einer Kegelradfläche (W) versehen sind, das Antriebskegelrad (23) ist drehbar an der äußeren Umfangswand der Drehwelle (70) angebracht, und das Antriebskegelrad (23) sich im Eingriff mit den Kegelradflächen (W) der beiden ringförmigen Halterahmen (42) befindet.

26. Drehanordnung nach Anspruch 21, wobei die Getriebeanordnung (20) ferner ein Federelement (22) aufweist, wobei das Federelement (22) auf einer Seite der Drehwelle (70) angeordnet ist, ein Ende des Federelements (22) mit dem ringförmigen Halterahmen (42) verbunden ist, das andere Ende des Federelements (22) mit dem Gehäuse (10) verbunden ist und das Federelement (22) die Wälzelemente (41) antreibt, um sowohl an den Vorsprüngen (73) als auch am Gehäuse (10) anzuliegen, um zu ermöglichen, dass die Drehwelle (70) und das Gehäuse (10) arretiert werden.

27. Drehanordnung nach Anspruch 21, wobei die äußere Umfangswand der Drehwelle (70) mit einem Begrenzungsabschnitt (53) versehen ist, der zwischen den beiden ringförmigen Halterahmen (42) angeordnet ist; der Begrenzungsabschnitt (53) eine ringförmige Flansch ist, die koaxial mit der Drehwelle (70) angeordnet ist, und ein Außendurchmesser der ringförmigen Flansch an einen Innendurchmesser der Montagebohrung (K1) angepasst ist.

28. Photographische Anordnung, umfassend:
eine Drehanordnung nach einem der Ansprüche 21 bis 27;
eine erste fotografische Vorrichtung, die mit dem Gehäuse (10) der Drehanordnung verbunden ist; und
eine zweite fotografische Vorrichtung, die mit der Drehwelle (70) der Drehanordnung verbunden ist.

## Revendications

1. Palier composite (100), appliqué à un dispositif photographique, comprenant :
un logement (10) défini avec un trou de montage (K1) ;
deux ensembles de verrouillage (40), disposés de manière rotative dans le trou de montage (K1) en séquence le long d'une direction axiale du trou de montage (K1), les deux ensembles de verrouillage (40) étant tous deux définis avec un trou traversant (K2) le long d'une direction axiale du logement (10), et le trou traversant (K2) étant conçu pour monter un arbre externe ;
un ensemble de transmission (20) relié respectivement aux deux ensembles de verrouillage (40) pour permettre aux deux ensembles de verrouillage (40) de serrer l'arbre externe dans le trou traversant (K2) des ensembles de verrouillage (40) ; et
un ensemble de déverrouillage (30) relié respectivement aux deux ensembles de verrouillage (40) et conçu pour entraîner les deux ensembles de verrouillage (40) à tourner afin de libérer l'arbre externe ;
**caractérisé en ce que**, une paroi latérale de chacun des ensembles de verrouillage (40) est pourvue d'une pluralité d'éléments roulants (41) disposés à intervalles et le long d'une périphérie de l'ensemble de verrouillage (40), et les éléments roulants (41) sont situés entre une paroi interne du trou de montage (K1) et l'arbre externe ; et
les éléments roulants (41) sont capables de se déplacer dans une direction radiale du logement (10) ; dans lequel l'ensemble de transmission (20) est conçu pour entraîner la pluralité d'éléments roulants (41) à se rapprocher d'un axe du trou traversant (K2), afin de permettre à la pluralité d'éléments roulants (41) de serrer et de verrouiller l'arbre externe ; et l'ensemble de déverrouillage (30) est conçu pour entraîner la pluralité d'éléments roulants (41) à s'éloigner de l'axe du trou traversant (K2), afin de permettre à la pluralité d'éléments roulants (41) de libérer l'arbre externe.

2. Palier composite selon la revendication 1, dans lequel l'ensemble de déverrouillage (30) comprend un élément d'opération (31) conçu pour une opération manuelle et une corde de traction (32), l'élément d'opération (31) est disposé sur le logement (10), la corde de traction (32) a deux extrémités, une extrémité étant reliée à l'un des deux ensembles de verrouillage (40) et l'autre extrémité étant reliée à l'autre des ensembles de verrouillage (40), et l'élément d'opération (31) est relié à la corde de traction (32) pour tirer les deux ensembles de verrouillage (40) afin qu'ils tournent dans des directions opposées au moyen de la corde de traction (32), ce qui amène les éléments roulants (41) des ensembles de verrouillage (40) à libérer l'arbre externe.

3. Palier composite (100) selon la revendication 2, dans lequel l'élément d'opération (31) comprend une gâchette (35) articulée avec le logement (10), la corde de traction (32) est suspendue à une extrémité de la gâchette (35), l'autre extrémité de la gâchette (35) définit une partie d'opération (311), et les deux ensembles de verrouillage (40) sont entraînés à tourner dans des directions opposées en tirant la corde de traction (32) vers l'extérieur par la gâchette (35).

4. Palier composite (100) selon la revendication 2, dans lequel l'élément d'opération (31) comprend un bouton disposé de manière rotative sur le logement (10), une extrémité du bouton le long de la direction axiale est reliée à la corde de traction (32), et les deux ensembles de verrouillage (40) sont entraînés à tourner dans des directions opposées par la corde de traction (32) en tournant le bouton.

5. Palier composite (100) selon la revendication 4, dans lequel un côté externe du logement (10) est pourvu de deux premiers bras de montage (12) disposés à intervalles et se faisant face, le bouton est disposé de manière rotative au niveau d'une partie supérieure des deux premiers bras de montage (12), une extrémité du bouton proche du trou de montage (K1) est positionnée au-dessus d'une partie centrale de la corde de traction (32), et la partie centrale de la corde de traction (32) est enfilée ou suspendue à une extrémité du bouton proche du trou de montage (K1).

6. Palier composite (100) selon la revendication 2, dans lequel l'élément d'opération (31) comprend un bouton, et une extrémité du bouton agit sur la corde de traction (32), en appuyant sur la corde de traction (32) vers le bas, pour entraîner les deux ensembles de verrouillage (40) à tourner dans des directions opposées.

7. Palier composite (100) selon la revendication 6, dans lequel le côté externe du logement (10) est pourvu de deux seconds bras de montage (13) disposés à intervalles et se faisant face, le bouton est relié de manière coulissante aux deux seconds bras de montage (13) le long d'une direction vers le trou de montage (K1), deux côtés du bouton sont pourvus respectivement d'une tige de limitation (121), les deux tiges de limitation (121) sont situées entre les deux seconds bras de montage (13), la partie centrale de la corde de traction (32) est suspendue aux deux tiges de limitation (121), et une extrémité du bouton proche du trou de montage (K1) est pressée contre la partie centrale de la corde de traction (32).

8. Palier composite (100) selon la revendication 1, dans lequel l'ensemble de déverrouillage (30) comprend un élément rotatif (33) disposé de manière rotative sur le logement (10), un axe de l'élément rotatif (33) est perpendiculaire à un axe du trou traversant (K2), une extrémité de l'élément rotatif (33) est pourvue d'un engrenage conique rotatif (331), deux extrémités adjacentes des deux ensembles de verrouillage (40) sont en prise avec l'engrenage conique rotatif (331), et l'élément rotatif (33) fait tourner l'engrenage conique rotatif (331) pour entraîner les deux ensembles de verrouillage (40) à tourner dans des directions opposées ;
ou ; l'ensemble de déverrouillage (30) comprend deux leviers (34), l'un des deux leviers (34) est relié à l'un des deux ensembles de verrouillage (40), et l'autre des leviers (34) est relié à l'autre des ensembles de verrouillage (40).

9. Palier composite (100) selon la revendication 1, dans lequel l'ensemble de verrouillage (40) comprend en outre un cadre de retenue annulaire (42) situé à l'intérieur du logement (10), le cadre de retenue annulaire (42) est défini avec une pluralité de fentes de montage (420) disposées à intervalles et le long d'une paroi périphérique du cadre de retenue annulaire (42), les éléments roulants (41) sont disposés de manière correspondante dans les fentes de montage (420) et sont capables de se déplacer dans une direction radiale du cadre de retenue annulaire (42) ; une paroi périphérique interne du logement (10) est pourvue d'une pluralité de parties de contact (11) réparties le long de la paroi périphérique interne du logement (10), chacune des parties de contact (11) correspond à et entre en contact avec l'un des éléments roulants (41) ; les parties de contact (11) correspondant à l'un des cadres de retenue annulaires (42) ont des hauteurs augmentant progressivement dans une première direction circonférentielle du trou de montage (K1) ; et les parties de contact (11) correspondant à l'autre cadre de retenue annulaire (42) ont des hauteurs diminuant progressivement dans la première direction circonférentielle du trou de montage (K1).

10. Palier composite (100) selon la revendication 9, dans lequel une différence entre une distance maximale et une distance minimale entre les parties en contact (11) et un axe du trou de montage (K1) est définie comme L, un diamètre du trou de montage (K1) est défini comme R ;
dans lequel L est compris entre 0, 3 mm et 1,5 mm, ou L est inférieure à 0,5 mm ; et/ou,
un rapport entre L et un rayon de l'élément roulant (41) est compris entre 0, 1 à 0, 6 ; et/ou,
un rapport entre L et R est compris entre 0, 012 à 0, 05 ; et/ou,
un diamètre extérieur du logement (10) est inférieur à 25 mm ; et/ou,
un rayon de chaque élément roulant (41) est compris entre 0, 3 mm et 20 mm.

11. Palier composite (100) selon la revendication 9, dans lequel une extrémité de chacun des deux ensembles de verrouillage (40) adjacente à l'autre ensemble de verrouillage (40) est pourvue d'un cliquet annulaire (43) ; chaque cadre de retenue annulaire (42) comprend une extrémité adjacente à l'autre cadre de retenue annulaire (42), chacune des deux extrémités adjacentes étant reliée à l'un des cliquets annulaires (43) ; un côté périphérique du logement (10) est défini avec un orifice de montage de cliquet (K3) s'étendant le long d'une direction circonférentielle du trou de montage (K1), l'orifice de montage de cliquet (K3) est disposé en regard d'une paroi latérale des deux cliquets annulaires (43), et l'ensemble de déverrouillage (30) est relié aux deux cliquets annulaires (43) à partir de l'orifice de montage de cliquet (K3).

12. Palier composite (100) selon la revendication 11, dans lequel l'ensemble de transmission (20) comprend un ressort de tension (21) disposé autour d'une paroi périphérique externe du logement (10), le ressort de tension (21) est situé dans un état tendu et est relié aux ensembles de verrouillage (40) pour permettre aux deux ensembles de verrouillage (40) de serrer l'arbre externe dans le trou traversant (K2) ; et le ressort de tension (21) s'étend de manière sinueuse le long d'une circonférence du logement (10).

13. Palier composite (100) selon la revendication 12, dans lequel une section centrale du ressort de tension (21) comprend une pluralité de parties en forme de S ou de parties en forme de Z ; des ouvertures des parties en forme de S sont orientées vers une extrémité du logement (10), ou des ouvertures des parties en forme de Z sont orientées vers l'extrémité du logement (10) ;
et/ou, deux extrémités du ressort de tension (21) sont pourvues d'un crochet (211), et chacun des deux crochets (211) est relié à l'un des deux ensembles de verrouillage (40) ;
et/ou, la paroi périphérique externe du logement (10) est définie avec une rainure annulaire (14), et le ressort de tension (21) est disposé dans la rainure annulaire (14).

14. Palier composite (100) selon la revendication 12, dans lequel le cliquet annulaire (43) est pourvu d'un montant de liaison (431) situé à l'extérieur de l'orifice de montage de cliquet (K3), le ressort de tension (21) est enroulé autour d'un côté du logement (10) opposé à l'orifice de montage de cliquet (K3), et le ressort de tension (21) a deux extrémités, chacune extrémité étant reliée au montant de liaison (431) de l'un des deux cliquets annulaires (43).

15. Palier composite (100) selon la revendication 14, dans lequel un côté interne de chacun des deux cliquets annulaires (43) est projeté avec plusieurs premières saillies (432) le long d'une direction radiale du cliquet annulaire (43), les plusieurs premières saillies (432) sont disposées à intervalles dans une direction circonférentielle des cliquets annulaires (43), deux extrémités adjacentes des deux cadres de retenue annulaires (42) sont pourvues de plusieurs secondes saillies (42) le long d'une direction axiale des cadres de retenue annulaires (42), les plusieurs secondes saillies (421) sont disposées à intervalles dans une direction circonférentielle des cadres de retenue annulaires (421) ; les plusieurs secondes saillies de chaque cadre de retenue annulaire (42) sont décalées par rapport aux plusieurs premières saillies (432) du cliquet annulaire (43) correspondant, et chaque seconde saillie (421) est serrée entre deux premières saillies (432) adjacentes ;
et/ou, une paroi interne du logement (10) est définie avec une rainure de positionnement de cliquet (15) annulaire, l'orifice de montage de cliquet (K3) est défini sur une surface inférieure de la rainure de positionnement de cliquet (15), et les deux cliquets annulaires (43) sont ajustés et serrés dans la rainure de positionnement de cliquet (15).

16. Palier composite (100) selon la revendication 1, dans lequel l'ensemble de déverrouillage (30) comprend un premier élément de traction (37a), un second élément de traction (37b), un élément de liaison (38) et un élément de déverrouillage (39) ; une extrémité du premier élément de traction (37a) est reliée de manière rotative à l'un des ensembles de verrouillage (40), l'autre extrémité du premier élément de traction (37a) est reliée de manière rotative à une extrémité de l'élément de liaison (38) ; une extrémité du second élément de traction (37b) est reliée de manière rotative à l'autre des ensembles de verrouillage (40), l'autre extrémité du second élément de traction (37b) est reliée de manière rotative à l'autre extrémité de l'élément de liaison (38) ; l'élément de déverrouillage (39) entraîne l'élément de liaison (38) à se déplacer vers le haut, afin d'entraîner le premier élément de traction (37a) et le second élément de traction (37b) à entraîner les deux ensembles de verrouillage (40) à tourner afin de libérer l'arbre externe.

17. Palier composite (100) selon la revendication 16, dans lequel l'ensemble de déverrouillage (30) comprend en outre une première tige d'arbre (301), la première tige d'arbre (301) a deux extrémités, l'une étant pourvue d'une première partie de liaison (52) et l'autre étant pourvue d'une seconde partie de liaison (391), la première partie de liaison (52) et la seconde partie de liaison (391) font saillie respectivement sur un côté avant et un côté arrière de l'élément de liaison (38), la première partie de liaison (52) est reliée au premier élément de traction (37a), ,et la seconde partie de liaison (391) est reliée au second élément de traction (37b).

18. Palier composite (100) selon la revendication 16 ou la revendication 17, dans lequel le palier composite comprend en outre un siège de montage (50) disposé sur le logement (10), le siège de montage (50) est défini avec un orifice de montage (51), une extrémité de l'élément de liaison (38) passant à travers l'orifice de montage (51) est pourvue d'une deuxième tige d'arbre (302), l'élément de déverrouillage (39) est relié de manière rotative au siège de montage (50) par l'intermédiaire d'une troisième tige d'arbre (303), la troisième tige d'arbre (303) est disposée parallèlement à la deuxième tige d'arbre (302), l'élément de déverrouillage (39) est défini avec une fente (392) définie avec une ouverture vers la deuxième tige d'arbre (302), une paroi périphérique externe de la deuxième tige d'arbre (302) vient en prise avec la fente (392), et l'élément de déverrouillage (39) entraîne la deuxième tige d'arbre (302) à se déplacer vers le haut afin d'entraîner l'élément de liaison (38) à se déplacer vers le haut lorsque l'élément de déverrouillage (39) tourne dans une première direction autour de la troisième tige d'arbre (303).

19. Palier composite (100) selon la revendication 18, dans lequel une surface supérieure du siège de montage (50) est pourvue de la première partie de liaison (52), l'élément de déverrouillage (39) comprend la seconde partie de liaison (391), la seconde partie de liaison (391) est définie avec une rainure de liaison (390), la première partie de liaison (52) passe à travers une ouverture inférieure de la rainure de liaison (390) et est logée de manière rotative dans la rainure de liaison (390), et la troisième tige d'arbre (303) comprend deux extrémités, chaque extrémité faisant saillie sur un côté de la première partie de liaison (52) et passant à travers une paroi latérale de la rainure de liaison (390).

20. Palier composite (100) selon la revendication 19, dans lequel un élément élastique (304) est prévu entre une paroi interne de la rainure de liaison (390) et une surface supérieure de la première partie de liaison (52), et l'élément élastique (304) est situé entre la deuxième tige d'arbre (302) et la troisième tige d'arbre (303) ;
ou, une partie supérieure de la seconde partie de liaison (391) est en outre reliée à une partie manuelle (393), et une surface externe e de la partie manuelle (393) est courbée.

21. Ensemble rotatif, comprenant :
un palier composite (100) selon l'une quelconque des revendications 1 à 20 ; et
un arbre rotatif (70) inséré dans les deux ensembles de verrouillage (40), les deux ensembles de verrouillage (40) comprenant en outre un cadre de retenue annulaire (42) situé à l'intérieur du logement (10), le cadre de retenue annulaire (42) étant défini avec une pluralité de fentes de montage (420) disposées à intervalles et le long d'une paroi périphérique du cadre de retenue annulaire (42), les éléments roulants (41) des ensembles de verrouillage (40) étant situés à l'intérieur des fentes de montage (420), une paroi périphérique externe de l'arbre rotatif (70) étant pourvue de deux saillies (73) correspondant aux deux cadres de retenue annulaires (42) ; les saillies (73), correspondant à l'un des cadres de retenue annulaires (42), ayant des hauteurs augmentant progressivement dans une seconde direction circonférentielle de l'arbre rotatif (70) ; les saillies (73), correspondant à l'autre cadre de retenue annulaire (42), ayant des hauteurs diminuant progressivement dans la seconde direction circonférentielle de l'arbre rotatif (70) ; et les éléments roulants (41) étant situés entre les saillies (73) et la paroi interne du trou de montage (K1).

22. Ensemble rotatif selon la revendication 21, dans lequel la paroi périphérique externe de l'arbre rotatif (70) correspondant à chaque cadre de retenue annulaire (42) est en outre pourvue d'une saillie annulaire (74) respective, la saillie annulaire (74) est coaxiale avec l'arbre rotatif (70), la hauteur de la saillie annulaire (74) est supérieure à la hauteur maximale des saillies (73), l'élément roulant (41) comprend au moins deux corps roulants, chacun des au moins deux corps roulants est serré dans deux côtés de la saillie annulaire (74) correspondante le long d'une direction axiale de la saillie annulaire (74) ; ou
au moins certaines des fentes de montage (420) sont pourvues d'au moins une cloison, la au moins une cloison divise les fentes de montage (420) en au moins deux segments disposés le long d'une direction axiale du cadre de retenue annulaire (42).

23. Ensemble rotatif selon la revendication 21, dans lequel l'élément roulant (41) comprend au moins un corps roulant (411), le corps roulant (411) est une bille, ou le corps roulant (411) est un cylindre avec un axe parallèle à un axe de l'arbre rotatif (70) ; une paroi du trou de montage (K1) et/ou les saillies (73) sont définies avec des chemins de roulement correspondant à la bille.

24. Ensemble rotatif selon la revendication 21, dans lequel l'ensemble de déverrouillage (30) du palier composite (100) comprend deux parties de poignée (305) ; chacun des deux cadres de retenue annulaires (42) comprend une extrémité opposée à l'autre cadre de retenue annulaire (42) et disposée avec l'une des deux parties de poignée (305).

25. Ensemble rotatif selon la revendication 21, dans lequel les deux cadres de retenue annulaires (42) sont entraînés ensemble par l'ensemble de transmission (20), l'ensemble de transmission (20) est conçu pour entraîner l'un des cadres de retenue annulaires (42) à tourner dans la direction opposée lorsque l'autre cadre de retenue annulaire (42) tourne ; l'ensemble de transmission (20) comprend un engrenage conique de transmission (23), l'engrenage conique de transmission (23) est situé entre les deux cadres de retenue annulaires (42), des extrémités des deux cadres de retenue annulaires (42) fermées l'une par rapport à l'autre sont toutes deux définies avec une surface d'engrenage conique (W), l'engrenage conique de transmission (23) est installé de manière rotative sur la paroi périphérique externe de l'arbre rotatif (70), et l'engrenage conique de transmission (23) s'engrène avec les surfaces d'engrenage conique (W) des deux cadres de retenue annulaires (42).

26. Ensemble rotatif selon la revendication 21, dans lequel l'ensemble de transmission (20) comprend en outre un élément ressort (22), l'élément ressort (22) est situé sur un côté de l'arbre rotatif (70), une extrémité de l'élément ressort (22) est reliée au cadre de retenue annulaire (42), l'autre extrémité de l'élément ressort (22) est reliée au logement (10), et l'élément ressort (22) entraîne les éléments roulants (41) pour résister à la fois aux saillies (73) et au logement (10), permettant ainsi le verrouillage de l'arbre rotatif (70) et du logement (10).

27. Ensemble rotatif selon la revendication 21, dans lequel la paroi périphérique externe de l'arbre rotatif (70) est pourvue d'une partie de limitation (53) située entre les deux cadres de retenue annulaires (42) ; la partie de limitation (53) est un rebord annulaire coaxial avec l'arbre rotatif (70), et un diamètre extérieur du rebord annulaire correspond à un diamètre intérieur du trou de montage (K1).

28. Ensemble photographique, comprenant :
un ensemble rotatif selon l'une quelconque des revendications 21 à 27 ;
un premier dispositif photographique relié au logement (10) de l'ensemble rotatif ; et
un second dispositif photographique relié à l'arbre rotatif (70) de l'ensemble rotatif.
